# EUROPEAN PATENT APPLICATION

(11) **EP 4 625 947 A1**
(43) Date of publication of application: **01.10.2025**
(21) Application number: 24744065.4
(22) Date of filing: 02.01.2024
(51) Int. Cl.: H04L 67/141

(54) **CONNECTION ESTABLISHMENT METHOD, CONTROLLER, NODE, COMMUNICATION SYSTEM, AND STORAGE MEDIUM**

(30) Priority: 18.01.2023 CN 202310100820
(71) Applicant: Huawei Technologies Co., Ltd., Shenzhen, Guangdong 518129 (CN)
(72) Inventor: XIE, Gang, Shenzhen, Guangdong 518129 (CN); LIN, Yi, Shenzhen, Guangdong 518129 (CN); CHEN, Wei, Shenzhen, Guangdong 518129 (CN)
(74) Representative: Goddar, Heinz J.
(86) International application number: PCT/CN2024/070116
(87) International publication number: WO 2024/152888

(57) **Abstract**

Embodiments of this application relate to a connection establishment method, a controller, a node, a communication system, a computer-readable storage medium, a chip, and a computer program product. The connection establishment method includes: A controller determines a logical tunnel from a first node of a plurality of nodes in a network to a second node of the plurality of nodes; and the controller updates the logical tunnel after the first node establishes a physical connection, where a common link exists between the physical connection and the logical tunnel. **In** this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

## Description

### TECHNICAL FIELD

The present disclosure relates to the communication field, and more specifically, to a connection establishment method, a controller, a node, a communication system, a computer-readable storage medium, a chip, and a computer program product.

### BACKGROUND

With increasing application of cloud services, a network needs to provide the cloud services with services that are more deterministic. An optical transport network (Optical Transport Network, OTN) connection is provided on time (that is, an OTN physical connection is established only when there is a service data transmission requirement). Therefore, to ensure application experience, for example, in a cloud virtual reality (Cloud Virtual Reality (VR)) scenario, time for establishing the OTN connection needs to be less than 1 second or even 100 ms.

In a conventional OTN connection establishment solution, an OTN head node requests a controller to compute a connection path. The controller computes an optimal path from the head node to a tail node, and then feeds back the optimal path to the head node. The OTN head node then sends an OTN connection establishment signaling message, where the signaling message is forwarded hop by hop along the path. After receiving the signaling message, an OTN intermediate node allocates a local port channel number and a bandwidth, and establishes a cross-connection between an ingress port and an egress port. After the OTN tail node processes the OTN connection establishment signaling message, an OTN connection is established successfully. However, performance of the conventional solution cannot meet service requirements in many scenarios.

### SUMMARY

In view of this, embodiments of the present disclosure provide a connection establishment method, a controller, a first node, a communication system, a computer-readable storage medium, a chip, and a computer program product.

According to a first aspect, a connection establishment method is provided. The method includes: A controller determines a logical tunnel from a first node of a plurality of nodes in a network to a second node of the plurality of nodes; and the controller updates the logical tunnel after the first node establishes a physical connection, where a common link exists between the physical connection and the logical tunnel. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments of the first aspect, determining the logical tunnel includes: The controller allocates corresponding logical labels to the first node, the second node, and a node between the first node and the second node; the controller computes a logical tunnel path from the first node to the second node based on the logical labels; and the controller determines the logical tunnel from the first node to the second node based on the logical tunnel path. In this way, the logical tunnel (including the logical tunnel path) can be pre-determined. Therefore, when the physical connection needs to be established, the logical tunnel path can be directly used to establish the physical connection without computing a path for each physical connection, so that the physical connection can be quickly established.

In some embodiments of the first aspect, allocating the corresponding logical label to the node includes: allocating the corresponding logical label to a physical port of the node, where the logical label is unique in the node. In this way, the logical label of the node can be bound to the physical port of the node, and a one-to-one correspondence is established between the logical labels and the physical ports, so that when the physical connection needs to be established, the logical tunnel path can be directly used to establish the physical connection, and therefore the physical connection can be quickly established.

In some embodiments of the first aspect, determining the logical tunnel from the first node to the second node includes: determining logical tunnel configuration information of the logical tunnel, where the logical tunnel configuration information includes a logical tunnel identifier, an available bandwidth, and a logical tunnel latency that are of the logical tunnel; and determining logical cross-connection information of the logical tunnel, where the logical cross-connection information includes: the logical tunnel identifier, and a relationship of forwarding from ingress logical labels of the first node, the second node, and the node between the first node and the second node to egress logical labels of the first node, the second node, and the node between the first node and the second node. In this way, the physical connection path can be obtained by searching for the corresponding logical tunnel path, to quickly establish the physical connection.

In some embodiments of the first aspect, the connection establishment method further includes: The controller sends the logical tunnel configuration information to the first node; and the controller sends the logical cross-connection information to the first node, the second node, and the node between the first node and the second node on the logical tunnel. In this way, the physical connection path can be obtained by searching for the corresponding logical tunnel path, to quickly establish the physical connection.

In some embodiments of the first aspect, computing the logical tunnel path includes: The controller computes the logical tunnel path from the first node to the second node based on network topology information. In this way, the logical tunnel path can be known in advance before the physical connection is established, and the logical tunnel can be determined. Therefore, when the physical connection needs to be established, the physical connection path can be obtained by searching for the corresponding logical tunnel path, so that the physical connection can be quickly established.

In some embodiments of the first aspect, computing the logical tunnel path based on the network topology information includes: The controller computes a plurality of candidate logical tunnel paths from the first node to the second node based on the network topology information; and the controller determines a candidate logical tunnel path of the plurality of candidate logical tunnel paths as the logical tunnel path based on at least one of available bandwidths and latencies of the plurality of candidate logical tunnel paths. In this way, the logical tunnel path can be pre-determined before the physical connection is established, and the logical tunnel at least one of whose available bandwidth and latency meets a requirement is determined. Therefore, when the physical connection needs to be established, the physical connection path can be obtained by searching for the corresponding logical tunnel path, so that the physical connection can be quickly established.

In some embodiments of the first aspect, the connection establishment method further includes at least one of the following: The controller stores the logical tunnel configuration information and the logical cross-connection information; and the controller updates the logical tunnel configuration information and the logical cross-connection information. In this way, the controller can locally maintain information related to the logical tunnel. When the physical connection needs to be established, a path does not need to be computed for the physical connection, and to obtain the physical connection path, it only needs to search for the corresponding logical tunnel path, so that the physical connection can be quickly established.

In some embodiments of the first aspect, the connection establishment method further includes: The controller receives a connection establishment complete message, where the connection establishment complete message indicates that the establishment of the physical connection between the first node and the second node is completed. In this way, the controller can learn in time that the establishment of the physical connection is completed.

In some embodiments of the first aspect, the connection establishment complete message includes a path and bandwidth information that are of the physical connection. In this way, the controller can learn of the path and the bandwidth information that are of the physical connection, and the controller can update the corresponding logical tunnel based on the path and the bandwidth information that are of the physical connection, so that the controller can learn of a latest available bandwidth of the logical tunnel after the establishment of the physical connection, improving reliability of subsequently establishing a suitable physical connection, and further improving system performance.

In some embodiments of the first aspect, updating the logical tunnel includes: The controller updates, in response to receiving the connection establishment complete message, the logical tunnel corresponding to the physical connection; or the controller periodically updates the logical tunnel corresponding to the physical connection. In this way, the controller can update the corresponding logical tunnel based on the physical connection, so that the controller can learn of a latest available bandwidth of the logical tunnel after the establishment of the physical connection, improving reliability of subsequently establishing a suitable physical connection, and further improving system performance.

In some embodiments of the first aspect, updating the logical tunnel corresponding to the physical connection includes: The controller updates an available bandwidth and a latency that are of the logical tunnel; and the controller notifies the first node of an updated available bandwidth and an updated latency that are of the logical tunnel. In this way, the controller can learn of a latest available bandwidth and a latest latency that are of the logical tunnel after the establishment of the physical connection, improving reliability of subsequently establishing a suitable physical connection.

In some embodiments of the first aspect, updating the available bandwidth and the latency that are of the logical tunnel includes: The controller searches for the corresponding logical tunnel based on physical ports through which the physical connection passes; and the controller recomputes and updates the available bandwidth and the latency that are of the corresponding logical tunnel. In this way, the controller can learn of a latest available bandwidth and a latest latency that are of the logical tunnel after the establishment of the physical connection, improving reliability of subsequently establishing a suitable physical connection.

In some embodiments of the first aspect, the logical tunnel does not occupy a physical bandwidth, and the logical tunnel corresponds to a plurality of physical connections. In this way, when the physical connection needs to be established, the logical tunnel path can be directly used to establish the physical connection without recomputing a path for each physical connection in real time. The physical connection path can be obtained by searching for the corresponding logical tunnel path, so that the physical connection can be quickly established.

According to a second aspect, a connection establishment method is provided. For beneficial effects, refer to the descriptions of the first aspect. Details are not described herein again. The connection establishment method includes: A first node in a network establishes a physical connection from the first node to a second node based on a logical tunnel from the first node to the second node in the network; and the first node updates the logical tunnel based on the establishment of the physical connection.

In some embodiments of the second aspect, that the first node updates the logical tunnel includes: The first node receives logical tunnel update configuration information from a controller in the network; and the first node updates the logical tunnel based on the logical tunnel update configuration information.

In some embodiments of the second aspect, that the first node establishes the physical connection based on the logical tunnel includes: The first node allocates a physical channel number and a physical bandwidth to the physical connection based on the logical tunnel.

In some embodiments of the second aspect, determining the logical tunnel includes: The first node receives logical tunnel configuration information of the logical tunnel from a controller in the network, where the logical tunnel configuration information includes a logical tunnel identifier, an available bandwidth, and a logical tunnel latency that are of the logical tunnel; the first node receives logical cross-connection information of the logical tunnel from the controller, where the logical cross-connection information includes: the logical tunnel identifier, and a relationship of forwarding from ingress logical labels of the first node, the second node, and a node between the first node and the second node to egress logical labels of the first node, the second node, and the node between the first node and the second node; and the first node determines the logical tunnel based on the logical tunnel configuration information and the logical cross-connection information.

In some embodiments of the second aspect, that the first node establishes the physical connection based on the logical tunnel further includes: The first node sends a connection establishment message to a downstream node, where the connection establishment message includes information related to both the physical bandwidth and the physical channel number; and the first node receives a connection establishment complete message, where the connection establishment complete message indicates that the establishment of the physical connection from the first node to the second node is completed.

In some embodiments of the second aspect, the connection establishment method further includes: In response to sending, by the first node, the connection establishment message to the downstream node, the first node pre-deducts a service bandwidth of the physical connection from a logical pipe of the first node.

In some embodiments of the second aspect, the connection establishment message includes a logical tunnel identifier of the logical tunnel, the physical bandwidth, and the physical channel number of the first node.

In some embodiments of the second aspect, the connection establishment method further includes: The first node sends the connection establishment complete message to the controller.

In some embodiments of the second aspect, that the first node updates the logical tunnel includes at least one of the following: The first node updates the logical tunnel in response to receiving the connection establishment complete message; the first node updates the logical tunnel in response to a failure of the controller; and the first node periodically updates the logical tunnel.

In some embodiments of the second aspect, updating the logical tunnel includes: The first node searches for the corresponding logical tunnel based on physical ports through which the physical connection passes; the first node recomputes an available bandwidth and a latency that are of the logical tunnel; and the first node notifies the downstream node of a changed available bandwidth and a changed latency that are of the logical tunnel.

In some embodiments of the second aspect, periodically updating the logical tunnel includes: The first node periodically sends a logical tunnel update request message to the downstream node; receives a logical tunnel update feedback message, where the logical tunnel update feedback message indicates an updated available bandwidth and an updated latency that are of the logical tunnel; and updates an available bandwidth and a latency that are of the logical tunnel based on the logical tunnel update feedback message.

In some embodiments of the second aspect, in response to receiving a service request message from an application side, the first node establishes the physical connection based on the logical tunnel.

In some embodiments of the second aspect, the service request message includes an address of the second node, a service bandwidth, and a latency.

In some embodiments of the second aspect, determining the logical tunnel includes: The first node searches for a candidate logical tunnel from the first node to the second node; the first node determines whether the candidate logical tunnel meets a service requirement required by the physical connection; and the first node determines, in response to determining that the candidate logical tunnel meets the service requirement, the candidate logical tunnel as the logical tunnel.

In some embodiments of the second aspect, determining that the candidate logical tunnel meets the service requirement includes: The first node determines that an available bandwidth and a latency that are of the candidate logical tunnel meet the service requirement.

In some embodiments of the second aspect, the logical tunnel is based on logical labels that are of physical ports of the first node, the second node, and a node between the first node and the second node and that are determined by a controller, and the logical label is unique in the node.

In some embodiments of the second aspect, the connection establishment method further includes at least one of the following: The first node stores a correspondence between the logical labels and the physical ports; and the first node updates the correspondence.

In some embodiments of the second aspect, the connection establishment method further includes at least one of the following: The first node searches for the physical port based on the logical label; and the first node searches for the logical tunnel based on the physical connection.

In some embodiments of the second aspect, the connection establishment method further includes at least one of the following: The first node stores a correspondence between the logical labels and logical labels of peer logical ports associated with the logical tunnel; and the first node updates the correspondence.

According to a third aspect, a controller is provided. The controller includes a processor and a memory. The memory stores instructions executed by the processor. When the instructions are executed by the processor, the controller is caused to implement the method according to any one of the possible implementations of the first aspect.

According to a fourth aspect, a first node is provided. The first node includes a processor and a memory. The memory stores instructions executed by the processor. When the instructions are executed by the processor, the first node is caused to implement the method according to any one of the possible implementations of the second aspect.

According to a fifth aspect, a communication system is provided. The communication system includes a controller and a first node, and is configured to implement the method according to any one of the possible implementations of the first aspect or the second aspect by using the controller and the first node.

According to a sixth aspect, a computer-readable storage medium is provided. The computer-readable storage medium stores a computer program. When the computer program is executed by a processor, the method according to any one of the possible implementations of the first aspect or the second aspect is implemented.

According to a seventh aspect, a chip is provided. The chip includes a processing circuit configured to perform the method according to any one of the possible implementations of the first aspect or the second aspect.

According to an eighth aspect, a computer program product is provided. The computer program product is tangibly stored in a computer-readable medium and includes computer-executable instructions. When the computer-executable instructions are executed, a device is caused to implement the method according to any one of the possible implementations of the first aspect or the second aspect.

According to the technical solutions of this application, a path does not need to be computed for each physical connection, and to obtain a physical connection path, it only needs to search for a corresponding logical tunnel path, so that information that needs to be carried in signaling can be greatly reduced, and a physical connection can be quickly established, thereby meeting a requirement of a cloud service for high real-time performance.

The summary part is provided to describe related concepts in a simplified form. The concepts are further described in the following description of embodiments. The summary part is not intended to identify key features or main features of the present invention, and is not intended to limit the scope of embodiments of this application.

### BRIEF DESCRIPTION OF DRAWINGS

FIG. 1A is a block diagram of a communication system in which an embodiment of this application can be implemented;
FIG. 1B is a block diagram of a controller according to some embodiments of this application;
FIG. 1C is a block diagram of a node according to some embodiments of this application;
FIG. 2 is an interaction signaling diagram of a connection establishment process according to example implementations of some embodiments of this application;
FIG. 3A is a diagram of a connection establishment process according to example implementations of some embodiments of this application;
FIG. 3B is another diagram of a connection establishment process according to example implementations of some embodiments of this application;
FIG. 4 is another diagram of a connection establishment process according to example implementations of some embodiments of this application;
FIG. 5 is a flowchart of a method implemented at a controller according to some embodiments of this application;
FIG. 6 is a flowchart of a method implemented at a first node according to some embodiments of this application;
FIG. 7 is a block diagram of a controller according to some embodiments of this application;
FIG. 8 is a block diagram of a first node according to some other embodiments of this application; and
FIG. 9 is a simplified block diagram of an example device suitable for implementing an embodiment of this application.

### DESCRIPTION OF EMBODIMENTS

The following describes embodiments of this application in more detail with reference to the accompanying drawings. Although some embodiments of this application are shown in the accompanying drawings, it should be understood that embodiments of this application can be implemented in various forms and should not be construed as being limited to embodiments described herein, and instead, these embodiments are provided for a more thorough and complete understanding of this application. It should be understood that, the accompanying drawings and embodiments of this application are merely used for example purposes, and are not intended to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". In embodiments of this application, for a type of technical feature, "first", "second", "third", and the like are used to distinguish between technical features in the type of technical feature, and there is no time or magnitude order between the technical features described by "first", "second", and "third". The following may further include other explicit and implied definitions.

The technical solutions in embodiments of the present disclosure are applied to a communication system that complies with any suitable communication protocol, Embodiments of the present disclosure may be implemented according to any suitable communication protocol applicable to a transport network. Such communication protocols include but are not limited to the International Telecommunication Union-Telecommunication Standardization Sector (ITU-T, International Telecommunication Union-Telecommunication Standardization Sector), the international internet engineering task force (IETF, internet engineering task force), the American Institute of Electrical and Electronics Engineers (IEEE, Institute of Electrical and Electronics Engineers), the International Electrotechnical Commission (IEC, International Electrotechnical Commission), the American National Standards Institute (ANSI, American National Standards Institute), and/or any other communication protocol currently known or developed in the future that is applicable to a transport network.

The communication system may use optical communication. The technical solutions in embodiments of the present disclosure are mainly applied to an optical transport network (OTN), that is, light is used as a communication medium for communication. For the purpose of illustration, the following describes embodiments of the present disclosure in the context of an optical communication system. However, it should be understood that embodiments of the present disclosure are not limited to the communication system, and may be applied to any communication system in which a similar scenario exists.

The term "terminal device" used in this application is any terminal device that can perform wired or wireless communication with a network device or between terminal devices. Currently, some examples of the terminal device include: a tablet computer, a notebook computer, a palmtop computer, a mobile internet device (mobile internet device, MID), cloudware (cloudware, or referred to as a "cloud computing operating system"), a wearable device (for example, a head-mounted device), a virtual reality (virtual reality, VR) device, an augmented reality (augmented reality, AR) device, and the like. This is not limited in embodiments of this application. By way of example, and not limitation, in embodiments of this application, the terminal device may be a head-mounted VR device, and the head-mounted VR device is an important part of development of an artificial intelligence (AI, artificial intelligence) technology. It may be understood that the terminal device in embodiments of this application may be a terminal that implements an application, for example, a terminal having a camera function, or a terminal that can perform data transmission. In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete device.

The terminal device may be connected to the optical transport network through an optical access network, to obtain a cloud service from a cloud node (cloud node). The term "network device" used in this application includes an optical access network (OAN, optical access network) device (for example, an optical network terminal (ONT, optical network terminal), an optical network unit (ONU, optical network unit), or an optical line terminal (OLT, optical line terminal)), a customer edge (CE, customer edge) device like an enterprise switch, an optical transport network (OTN) device, or the like. The enterprise switch is mainly oriented to enterprise users, and the optical network terminal ONT and the optical line terminal OLT are mainly oriented to home users. For example, a cloud pool (cloud pool) may be deployed at the cloud node. A wired access network (for example, an OAN) or an enterprise switch may access the cloud node through an optical transport network (an OTN), and obtain the cloud service from the cloud node. For example, the wired access network or the enterprise switch may offload (offload) a computing task to the cloud node through the optical transport network, and after completing the computing task, the cloud node returns a computing result to the wired access network or the enterprise switch through the optical transport network. For ease of description, in subsequent embodiments of the present disclosure, the foregoing apparatuses that provide a network service for the terminal device are collectively referred to as a network device. This is not specifically limited in embodiments of the present disclosure.

With gradual application of cloud services, cloud-network coupling becomes tighter, and a network needs to provide the cloud services with services that are more deterministic. In scenarios such as manufacturing, security protection, VR, and metaspace that require high real-time performance, cloud nodes can be flexibly scheduled, and the network can provide an OTN connection with an available bandwidth, security, and a stable latency for a cloud service in real time and on demand. The OTN connection is provided on time. Therefore, to ensure application experience, for example, in a Cloud VR scenario, time for establishing the OTN connection needs to be less than 1 second or even 100 ms.

A current OTN connection establishment solution is implemented as follows: An OTN head node requests a controller to compute a connection path (service path). The controller computes an optimal path from the head node to a tail node, and then feeds back the optimal path to the head node. The OTN head node then sends an OTN connection establishment signaling message, where the signaling message is forwarded hop by hop along the path. After receiving the signaling message, an OTN intermediate node allocates a local port channel number and a bandwidth, and establishes a cross-connection between an ingress port and an egress port. After the OTN tail node processes the signaling message, an OTN connection is established successfully.

The foregoing current solution has the following main problems. First, a path cannot be pre-computed for each service. Because a source and a sink are not determined during service provisioning, a path cannot be pre-computed for a service. In addition, even if a service path (namely, a physical connection) is pre-computed, in a period from establishment of the physical connection to transmission of actual service data on the physical connection, the physical connection occupies a bandwidth but is not used. This is a huge waste of network resources. In addition, path computation is time-consuming, and takes seconds or even more than 10 seconds. Therefore, if the service path is computed in real time after a service data transmission requirement exists, a latency is excessively long and it is difficult to meet a service requirement, especially a requirement of a cloud service for high real-time performance. In addition, conventional RSVP performance is low. A size of information that needs to be carried in a signaling message is: service identifier+bandwidth+(node+link+channel)*hop count. A larger hop count indicates lower forwarding performance. In addition, due to a limitation of a communication bandwidth, when a plurality of services need to be requested to be established at the same time, signaling forwarding performance deteriorates to more than 10 seconds. Therefore, in general, the current solution cannot meet the requirement of the cloud service for high real-time performance due to limitations of computing performance and signaling forwarding performance.

In view of this, embodiments disclosed in this application provide a connection establishment method. In the connection establishment method, a logical tunnel is preconfigured. A controller computes the logical tunnel between a head node and a tail node, including computing a logical tunnel path, an available bandwidth (for example, the available bandwidth of the logical tunnel path may be determined based on a smallest remaining bandwidth of remaining bandwidths of all links that the logical tunnel path passes through), and a latency; and configures the logical tunnel, including configuring a logical label corresponding to a physical port, a logical label forwarding table, and the like. The logical tunnel does not occupy an actual physical bandwidth. One logical tunnel corresponds to a plurality of physical connections. The "logical tunnel path" herein represents a logical connection relationship between nodes, namely, a relationship of forwarding between logical labels of the nodes, and specifically, a relationship of forwarding from ingress logical labels of the head node, the tail node, and a node between the head node and the tail node to egress logical labels of the head node, the tail node, and the node between the head node and the tail node. When configuring the logical tunnel, the controller determines logical tunnel configuration information of the logical tunnel and sends the logical tunnel configuration information to the head node, where the logical tunnel configuration information includes a logical tunnel identifier, an available bandwidth, and a logical tunnel latency that are of the logical tunnel. In addition, the controller further determines logical cross-connection information of the logical tunnel and sends the logical cross-connection information to all nodes from the head node to the tail node, where the logical cross-connection information includes the logical tunnel identifier, and the relationship of forwarding from the ingress logical labels of the head node, the tail node, and the node between the head node and the tail node to the egress logical labels of the head node, the tail node, and the node between the head node and the tail node.

When receiving a connection establishment request, the head node may establish a logical tunnel in real time. Specifically, whether the logical tunnel meets a physical connection service requirement is determined based on the available bandwidth and the latency that are of the logical tunnel. If the logical tunnel meets the physical connection service requirement, signaling may be directly sent based on the logical tunnel without computing a physical connection path in real time. In addition, a channel, a bandwidth, and a cross-connection need to be configured in the signaling based only on physical ports, and the signaling only needs to carry a connection identifier and the bandwidth. In this way, a path does not need to be computed for each physical connection, and to obtain a physical connection path, it only needs to search for a corresponding logical tunnel path, so that information that needs to be carried in signaling can be greatly reduced, forwarding performance can be greatly improved, the physical connection can be quickly established, and an OTN connection can be quickly established for a cloud service requiring high real-time performance, thereby meeting the requirement of the cloud service for the high real-time performance.

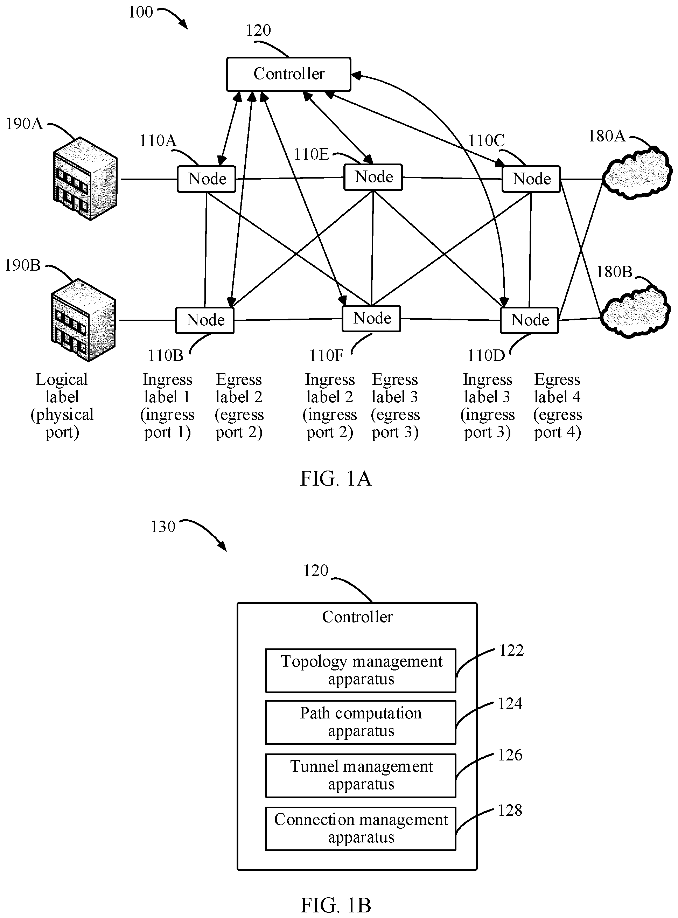

FIG. 1A is a block diagram of a communication system 100 in which an embodiment of this application can be implemented. As shown in FIG. 1A, the communication system 100 is a part of an OTN network, and includes several network devices, such as a controller 120, head nodes 110A and 110B, tail nodes 110C and 110D, and intermediate nodes 110E and 110F. The nodes 110A, 110B, 110C, 110D, 110E, and 110F may also be collectively referred to as a node 110. The node 110 may be, for example, an optical network unit (ONU) in the OTN network. The controller 120 may perform bidirectional communication with each node 110. To be specific, the controller 120 may receive information from each node 110, or may send information to each node 110. The controller 120 may be, for example, an optical service unit (OSU, optical service unit) in the OTN network. In some embodiments, the head nodes 110A and 110B may be connected to user sides, and receive service requests from the user sides. The user sides may be, for example, enterprise terminals 190A and 190B, and the enterprise terminals 190A and 190B may be, for example, central offices (central offices, COs). Several terminals may be disposed in the enterprise terminals 190A and 190B. The tail nodes 110C and 110D may be connected to cloud nodes. As shown in FIG. 1A, the tail node 110C is connected to a cloud node 180A, and the tail node 110D is connected to a cloud node 180B. The cloud nodes 180A and 180B may be disposed, for example, on a cloud (Cloud), and provide a cloud service for the user sides (for example, the enterprise terminals 190A and 190B) and the nodes 110A, 110B, 110C, 110D, 110E, and 110F in the communication system 100. Head nodes represent nodes directly connected to the user sides in the OTN network, for example, the nodes 110A and 110B shown in FIG. 1A. Tail nodes represent nodes directly connected to the cloud nodes in the OTN network, for example, the nodes 110C and 110D shown in FIG. 1A. Nodes located between the head nodes and the tail nodes (excluding the head nodes and the tail nodes) in the OTN network are sometimes referred to as "intermediate nodes", for example, the nodes 100E and 100F shown in FIG. 1A. In some embodiments, the head node and the tail node are respectively referred to as a "first node" and a "second node".

The technical solutions of embodiments of this application focus on the following application scenario: For a cloud service (namely, a service that needs to obtain a cloud service from cloud nodes), a quantity of cloud nodes is limited. Therefore, a quantity of logical tunnels established from OTN nodes (for example, the head nodes 110A and 110B shown in FIG. 1A) accessed by the user sides (for example, the enterprise terminals 190A and 190B) to cloud nodes (for example, the cloud nodes 180A and 180B shown in FIG. 1A) is limited. Currently, cloud services do not have many constraints of a conventional automatically switched optical network, for example, do not have many constraints in terms of a minimum hop count/a shortest distance, and requirements such as an available bandwidth and a latency mainly need to be considered. In addition, the latency is set based on a fixed latency like 1-3-10, so that a computation amount of a logical tunnel can be reduced. The fixed latency of 1-3-10 means that when a logical tunnel is computed, a candidate logical tunnel is considered based on a latency of 1 ms, 3 ms, or 10 ms, instead of exhausting all possible logical tunnels based on a graph theory (graph theory) as in the past. For example, in the embodiment shown in FIG. 1A, if a candidate logical tunnel is considered based on the latency of 3 ms (that is, if a latency of the logical tunnel is required to be within 3 ms), and a latency between the head node 110A and the intermediate node 110F already reaches 3.1 ms, a logical tunnel that is from the head node 110A to the tail node 110C or 110D and that passes through a link from the head node 110A to the intermediate node 110F does not need to be considered. Because a latency of the link from the head node 110A to the intermediate node 110F has exceeded 3.1 ms, the requirement that the latency of the logical tunnel is within 3 ms is not met. Therefore, this manner can reduce the computation amount of the logical tunnel.

In some embodiments, for example, as shown in FIG. 1A, logical labels: an ingress label 1 and an egress label 2 are respectively allocated to a physical ingress port 1 and a physical egress port 2 of the head node 110A; logical labels: an ingress label 2 and an egress label 3 are respectively allocated to a physical ingress port 2 and a physical egress port 3 of the intermediate node 110E; and logical labels: an ingress label 3 and an egress label 4 are respectively allocated to a physical ingress port 3 and a physical egress port 4 of the tail node 110C.

FIG. 1B is a block diagram 130 of the controller 120 according to some embodiments of this application. The controller 120 according to some embodiments of this application is mainly configured to implement logical tunnel path computation and logical tunnel configuration management. As shown in FIG. 1B, the controller 120 may include a topology management apparatus 122, a path computation apparatus 124, a tunnel management apparatus 126, and a connection management apparatus 128. The topology management apparatus 122 is configured to manage network-wide physical ports and logical labels, including allocating and configuring logical labels, and so on. The path computation apparatus 124 is configured to compute logical tunnel paths that pass through the OTN network and that are between the user sides (for example, the enterprise terminals 190A and 190B shown in FIG. 1A) and the cloud nodes (for example, the cloud nodes 180A and 180B shown in FIG. 1A), including computing an available bandwidth, a latency, and the like. The tunnel management apparatus 126 is adapted to configure a logical tunnel that passes through the OTN network and that is between the user side and the cloud node, including configuring a corresponding logical label for each physical port, and configuring a corresponding label forwarding table based on a logical tunnel path. The connection management apparatus 128 is configured to manage a physical connection, and refresh information such as an available bandwidth and a latency that are of a logical tunnel based on a change of the physical connection. Note that in a conventional wired or wireless network like the IP internet, a bandwidth can be shared, and therefore no logical tunnel refresh is needed. However, because a bandwidth of a physical connection in an optical transport network (OTN) cannot be shared, a logical tunnel needs to be refreshed, so that all information, such as an available bandwidth and a latency, that is about the logical tunnel in the OTN network and that is locally stored by the controller 120 and each node 110 is the latest and can reflect a current latest status of the OTN network.

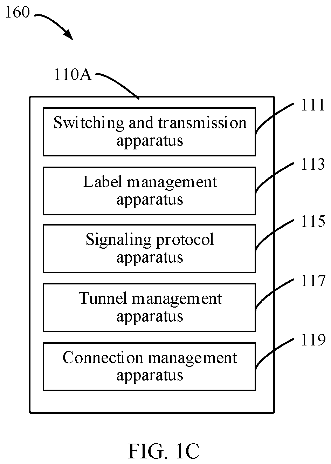

FIG. 1C is a block diagram 160 of an OTN node according to some embodiments of this application. As shown in FIG. 1C, the OTN node (for example, the head node 110A or 110B, the tail node 110C or 110D, or the intermediate node 110E or 110F shown in FIG. 1A) is mainly configured to implement establishment of a physical connection, allocate a channel number of the physical connection via signaling, and configure a port bandwidth and a cross-connection table via signaling. As shown in FIG. 1C, the OTN node mainly includes a switching and transmission apparatus 111, a label management apparatus 113, a signaling protocol apparatus 115, a tunnel management apparatus 117, and a connection management apparatus 119. The switching and transmission apparatus 111 is a physical device, and is configured to implement OTN physical connection and switching. The signaling protocol apparatus 115 is configured to implement forwarding and processing of a protocol, including carrying a connection identifier and a bandwidth, performing hop-by-hop forwarding along a path, and implementing establishment and deletion of a physical connection, and refreshing of information such as an available bandwidth and a latency that are of a logical tunnel. The tunnel management apparatus 117 is configured to support management of a maximum available bandwidth and a latency that are of a tunnel, a correspondence between a logical label and a physical port, a logical label forwarding table, and the like. The connection management apparatus 119 is configured to support management of a physical connection path, including allocation of a physical port channel number and a bandwidth, establishment and deletion of a physical cross-connection, and the like. Note that in an IP-based network, a logical tunnel may be directly used to send both network signaling and service data. However, in an optical transport network (OTN), a logical tunnel can only send network signaling, and cannot be directly used for transmission of service data. The transmission of the service data needs to be performed through a physical channel. Therefore, in the OTN network, to perform transmission of the service data, a physical connection needs to be established based on a logical tunnel, and a physical channel is bound to the logical tunnel. In other words, in the OTN network, before the transmission of the service data is performed, the physical channel corresponding to the logical tunnel needs to be applied for, and then the transmission of the service data is performed through the physical channel.

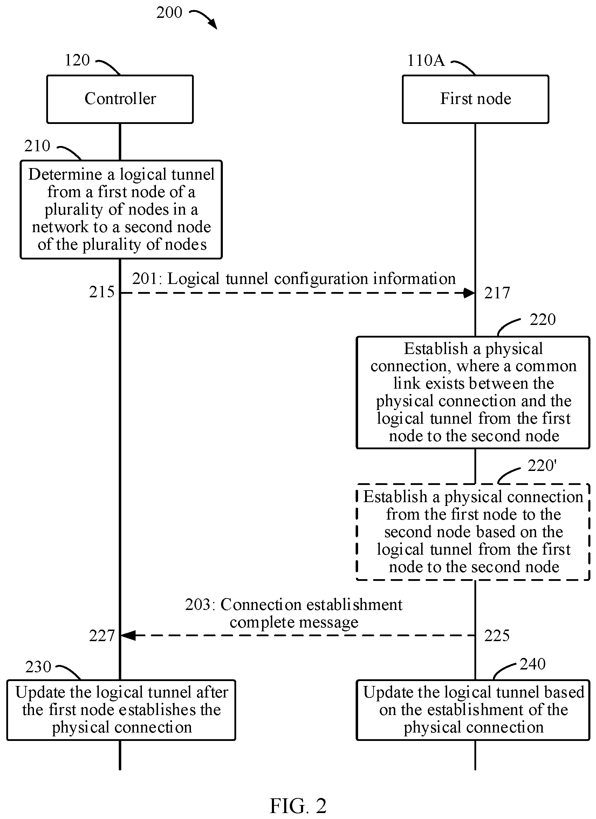

FIG. 2 is an interaction signaling diagram of a connection establishment process 200 according to example implementations of some embodiments of this application. The connection establishment process 200 relates to a controller and a first node, where the controller is, for example, the controller 120 shown in FIG. 1A and FIG. 1B, and the first node is, for example, the OTN head node 110A shown in FIG. 1A and FIG. 1C. The following describes the connection establishment process 200 with reference to FIG. 1A, FIG. 1B, and FIG. 1C.

As shown in FIG. 2, in the connection establishment process 200, the controller 120 determines (210) a logical tunnel from the first node 110A of a plurality of nodes in a network (for example, the OTN network) to a second node (for example, the tail node 110C or 110D shown in FIG. 1A) of the plurality of nodes.

The first node 110A then establishes (220) a physical connection, and sends (225) a connection establishment complete message 203 to the controller 120. A common link exists between the physical connection and the logical tunnel determined (210) by the controller 120. For example, in the embodiment shown in FIG. 1A, if a path of the logical tunnel determined (210) by the controller 120 is "first node 110A-intermediate node 110E-tail node 110C", and a path of the physical connection established by the first node 110A is "first node 110A-intermediate node 110E-tail node 110D", a common link (namely, a link "first node 110A-intermediate node 110E") exists between the logical tunnel and the physical connection.

In addition, based on the establishment of the physical connection, the first node 110A may update (240) the logical tunnel. Specifically, for the foregoing example, when the logical tunnel is refreshed, the first node 110A knows that an available bandwidth of the first node 110A is, for example, 10G, but does not know respective available bandwidths of downstream nodes, namely, the node 110E and the tail node 110C. Therefore, to refresh the logical tunnel, the first node 110A temporarily specifies a bandwidth of the logical tunnel to 10G, notifies a downstream node, namely, the node 110E, of the bandwidth, and requests the downstream node 110E to check and update an available bandwidth of the logical tunnel. If an available bandwidth of the node 110E is less than 10G, for example, 8G, because 8G (the available bandwidth of the node 110E)<10G (the current temporarily-specified available bandwidth of the logical tunnel), the node 110E temporarily specifies the available bandwidth of the logical tunnel to 8G (namely, the smaller one between the available bandwidth of the node 110E and the current temporarily-specified available bandwidth of the logical tunnel), notifies a downstream node, namely, the tail node 110C, of the available bandwidth of the logical tunnel, and requests the tail node 110C to check and update the available bandwidth of the logical tunnel. For another example, if an available bandwidth of the node 110E is greater than 10G, for example, 12G, because 12G (the available bandwidth of the node 110E)>10G (the available bandwidth of the first node 110A), the node 110E does not change the available bandwidth of the logical tunnel and keeps the available bandwidth of the logical tunnel as 10G, notifies a downstream node, namely, the tail node 110C, of the available bandwidth of the logical tunnel, and requests the tail node 110C to check and update the available bandwidth of the logical tunnel. The tail node 110C is the tail node of the logical tunnel, and checks an available bandwidth, for the logical tunnel, between the tail node 110C and the upstream node 110E. For example, if the available bandwidth of the tail node 110C is only 7G, because 7G (the available bandwidth of the tail node 110C)<8G (the current temporarily-specified available bandwidth of the logical tunnel), the node 110C determines that the available bandwidth of the logical tunnel is 7G, notifies the first node 110A of the available bandwidth of the logical tunnel through the intermediate node 110E, and requests the first node 110A to refresh the available bandwidth of the logical tunnel to 7G. In response to the request from the tail node 110C for refreshing the available bandwidth of the logical tunnel, the first node 110A refreshes the available bandwidth of the logical tunnel. In this example, the available bandwidth of the logical tunnel is refreshed to 7G. In other words, the available bandwidth of the logical tunnel depends on a smallest available bandwidth in the available bandwidth of the logical tunnel before refreshing and available bandwidths of the nodes on the logical tunnel.

On a controller 120 side, the controller 120 receives (227) the connection establishment complete message 203. In response to receiving (227) the connection establishment complete message 203, the controller 120 updates (230) the logical tunnel. As described above, the common link exists between the physical connection and the logical tunnel determined (210) by the controller. For example, as described above, in the embodiment shown in FIG. 1A, if the path of the logical tunnel determined (210) by the controller 120 is "first node 110A-intermediate node 110E-tail node 110C", and the path of the physical connection established by the first node 110A is "first node 110A-intermediate node 110E-tail node 110D", because the common link (namely, the link "first node 110A-intermediate node 110E") exists between the path of the logical tunnel and the path of the physical connection, the establishment of the physical connection triggers a controller to refresh the logical tunnel, specifically, refresh information such as an available bandwidth and a latency that are of each link segment related to the logical tunnel. A specific refresh manner is similar to the refresh performed by the first node 110A above. Details are not described herein again. In addition, because the first node 110A, the intermediate node 110E, and the tail node 110C on the logical tunnel may respectively relate to other logical tunnels, the controller 120 further refreshes the logical tunnels related to the nodes 110A, 110E, and 110C, and so on. In this way, logical tunnels that are directly or indirectly affected in the OTN network are refreshed step by step, to implement network-wide refresh in the entire OTN network.

Note that for the embodiment shown in FIG. 1A, if the path of the logical tunnel determined (210) by the controller 120 is "first node 110A→intermediate node 110E→tail node 110C", and the path of the physical connection established by the first node 110A is "first node 110A-intermediate node 110F→tail node 110D", although the common node 110A exists between the path of the logical tunnel and the path of the physical connection, no common link exists. Therefore, completion of the establishment of the physical connection does not trigger the controller 120 to refresh the logical tunnel.

Note that although FIG. 2 shows that the first node 110A updates (240) the logical tunnel after sending (225) the connection establishment complete message 203, the first node 110A may alternatively update (240) the logical tunnel before sending (225) the connection establishment complete message 203.

The physical connection is established based on the logical tunnel. An available bandwidth and a latency that are of a physical path (which may also be referred to as a "physical channel") corresponding to the physical connection are consistent with an available bandwidth and a latency that are of the corresponding logical tunnel.

In some embodiments, after the controller 120 determines (210) the logical tunnel, the controller 120 may send (215) logical tunnel configuration information 201 associated with the logical tunnel to the first node 110A. On the other side of the communication, the first node 110A may receive (217) the logical tunnel configuration information 201. Alternatively, the first node 110A may specifically establish the physical connection as follows: Instead of 220, the first node 110A establishes (220') a physical connection from the first node 110A to the second node 110C based on the logical tunnel (namely, the logical tunnel determined (210) by the controller 120) from the first node 110A to the second node 110C (or 110D), and sends (225) the connection establishment complete message 203 to the controller 120. In addition, based on the establishment of the physical connection, the first node 110A may update (240) the logical tunnel.

In this case, because the first node 110A establishes (220') the physical connection based on the logical tunnel determined (210) by the controller 120, a path of the physical connection completely overlaps the path of the logical tunnel. Therefore, the controller 120 updates (230) the logical tunnel, and the first node 110A updates (240) the logical tunnel. A specific update manner is described above. Details are not described herein again.

In some embodiments, to determine (210) the logical tunnel, the controller 120 may allocate corresponding logical labels to the first node 110A (or 110B), the second node 110C (or 110D), and the node (in FIG. 1A, the intermediate node 110E or 110F) between the first node 110A (or 110B) and the second node 110C (or 110D). Based on the logical labels, the controller 120 then computes a logical tunnel path from the first node 110A (or 110B) to the second node 110C (or 110D). Based on the logical tunnel path, the controller 120 determines the logical tunnel from the first node 110A (or 110B) to the second node 110C (or 110D).

In some embodiments, in a process of allocating a corresponding logical label to a node, the controller 120 allocates a corresponding logical label to a physical port of the node, where the logical label is unique in the node. For example, the controller 120 allocates a corresponding logical label to a physical port of the first node 110A (or 110B), where the logical label is unique in the first node 110A (or 110B). For another example, the controller 120 allocates a corresponding logical label to a physical port of the second node 110C (or 110D), where the logical label is unique in the second node 110C (or 110D). For another example, the controller 120 allocates a corresponding logical label to a physical port of the intermediate node 110E (or 110F), where the logical label is unique in the intermediate node 110E (or 110F).

In some embodiments, to determine the logical tunnel from the first node 110A (or 110B) to the second node 110C (or 110D), the controller 120 may determine logical tunnel configuration information (for example, the logical tunnel configuration information 201 shown in FIG. 2) of the logical tunnel, where the logical tunnel configuration information may include a logical tunnel identifier, an available bandwidth, and a logical tunnel latency that are of the logical tunnel. The controller 120 may further determine logical cross-connection information of the logical tunnel, where the logical cross-connection information may include the logical tunnel identifier, and a relationship of forwarding from ingress logical labels of the first node, the second node, and the node between the first node and the second node to egress logical labels of the first node, the second node, and the node between the first node and the second node.

In some embodiments, the controller 120 further sends the logical tunnel configuration information to the first node (for example, the node 110A (or 110B)), and sends the logical cross-connection information to the first node (for example, the node 110A (or 110B)) and the second node (for example, the node 110C (or 110D)), and the node (as described above, the intermediate node 110E or 110F in FIG. 1A) between the first node and the second node.

In some embodiments, in a process of computing the logical tunnel path, the controller 120 may compute the logical tunnel path from the first node (for example, the node 110A or 110B) to the second node (for example, the node 110C or 110D) based on network topology information.

In some embodiments, in a process of computing the logical tunnel path, the controller 120 may compute, based on network topology information, a plurality of candidate logical tunnel paths from the first node (for example, the node 110A or 110B) to the second node (for example, the node 110C or 110D). Based on at least one of available bandwidths and latencies of the plurality of candidate logical tunnel paths, the controller 120 then determines a candidate logical tunnel path of the plurality of candidate logical tunnel paths as the logical tunnel path. For example, the controller 120 may select a candidate logical tunnel path with a largest available bandwidth from the plurality of candidate logical tunnel paths as the logical tunnel path, or may select a candidate logical tunnel path with a smallest latency from the plurality of candidate logical tunnel paths as the logical tunnel path, or may select, based on a required available bandwidth and a required latency, a candidate logical tunnel path that meets the requirements from the plurality of candidate logical tunnel paths as the logical tunnel path. If there are a plurality of candidate logical tunnel paths that meet the requirements, a candidate logical tunnel path with a largest available bandwidth may be selected as the logical tunnel path, or a candidate logical tunnel path with a smallest latency may be selected as the logical tunnel path, or any one of the candidate logical tunnel paths may be selected as the logical tunnel path.

In some embodiments, the controller 120 may further store the logical tunnel configuration information and the logical cross-connection information. Alternatively or additionally, the controller 120 may further update the logical tunnel configuration information and the logical cross-connection information.

In some embodiments, the controller 120 receives a connection establishment complete message, where the connection establishment complete message indicates that the establishment of the physical connection between the first node and the second node is completed. As shown in FIG. 2, the controller 120 receives the connection establishment complete message 203 from the second node (for example, 110C or 110D) through the first node (for example, the node 110A or 110B shown in FIG. 1A, or the node 110A shown in FIG. 2). The connection establishment complete message 203 indicates that the establishment of the physical connection between the first node and the second node is completed.

In some embodiments, the connection establishment complete message 203 includes a path and bandwidth information that are of the physical connection.

In some embodiments, in a process of updating the logical tunnel, if the connection establishment complete message 203 is received, the controller 120 may update the logical tunnel corresponding to the physical connection. Alternatively or additionally, the controller 120 may periodically update the logical tunnel corresponding to the physical connection. For example, if the connection establishment complete message 203 is received, the controller 120 may immediately update the logical tunnel corresponding to the physical connection in real time. For another example, the controller 120 may periodically update the logical tunnel corresponding to the physical connection. Specifically, after receiving the connection establishment complete message 203, the controller 120 may periodically update the logical tunnel corresponding to the physical connection.

In some embodiments, to update the logical tunnel corresponding to the physical connection, the controller 120 may update the available bandwidth and the latency that are of the logical tunnel, and notify the first node 110A of an updated available bandwidth and an updated latency that are of the logical tunnel.

In some embodiments, to update the available bandwidth and the latency that are of the logical tunnel, the controller 120 may search for the corresponding logical tunnel based on physical ports through which the physical connection passes, and then recompute and update the available bandwidth and the latency that are of the corresponding logical tunnel.

In some embodiments, the first node 110A is connected to an application side, and the second node is connected to a cloud node. As shown in FIG. 1A, the head nodes 110A and 110B are connected to application sides (for example, the enterprise terminals 190A and 190B shown in FIG. 1A), and the tail nodes 110C and 110D are connected to the cloud nodes 180A and 180B.

In some embodiments, the logical tunnel does not occupy a physical bandwidth, and the logical tunnel corresponds to a plurality of physical connections. For example, for a logical tunnel whose path is "head node 110A→intermediate node 110E→tail node 110C", it is assumed that an available bandwidth of the logical tunnel is 100G. If a service request is received from an application side (for example, the enterprise terminal 190A or 190B shown in FIG. 1A), and needs to occupy a physical bandwidth of 10G for service data transmission, a physical connection with a 10G service bandwidth (namely, physical bandwidth) from the head node 110A to the tail node 110C may be directly established based on the path (namely, the foregoing path "head node 110A-intermediate node 110E-tail node 110C") of the existing logical tunnel, for the service data transmission. In this case, 10G in the original 100G available bandwidth of the logical tunnel is occupied by the established physical connection. Therefore, a remaining available bandwidth of the logical tunnel changes to 90G (=100G-10G). In this case, if another service request is from the application side, and needs to occupy, for example, a physical bandwidth of 15G for service data transmission, a physical connection with a 15G service bandwidth from the head node 110A to the tail node 110C may also be directly established based on the logical tunnel path of the existing logical tunnel, for the service data transmission. In this case, 15G in the remaining 90G available bandwidth of the logical tunnel is occupied by the subsequently established physical connection, and therefore, the remaining available bandwidth of the logical tunnel changes to 75G (=90G-15G). In this case, if the previously established physical connection is deleted (for example, because the service data transmission on the physical connection is completed), the 10G service bandwidth occupied by the physical connection may be reclaimed by the logical tunnel. In response to this, the remaining available bandwidth of the logical tunnel changes to 85G (=75G+10G).

In some embodiments, to update the logical tunnel, the first node 110A receives logical tunnel update configuration information from the controller (for example, the controller 120 shown in FIG. 1A or FIG. 2) in the network, and then the first node 110A updates the logical tunnel based on the logical tunnel update configuration information.

In some embodiments, to establish the physical connection, the first node 110A determines the logical tunnel, and then allocates a physical channel number and a physical bandwidth to the physical connection based on the logical tunnel.

In some embodiments, to determine the logical tunnel, the first node 110A may receive logical tunnel configuration information of the logical tunnel from the controller 120, where the logical tunnel configuration information includes a logical tunnel identifier, an available bandwidth, and a logical tunnel latency that are of the logical tunnel. The first node 110A may further receive logical cross-connection information of the logical tunnel from the controller 120, where the logical cross-connection information includes the logical tunnel identifier, and a relationship of forwarding from ingress logical labels of the first node 110A, the second node (for example, the node 110C (or 110D) shown in FIG. 1A), and the node (the intermediate node 110E or 110F in FIG. 1A) between the first node 110A and the second node to egress logical labels of the first node 110A, the second node (for example, the node 110C (or 110D) shown in FIG. 1A), and the node (the intermediate node 110E or 110F in FIG. 1A) between the first node 110A and the second node. The first node 110A may then determine the logical tunnel based on the logical tunnel configuration information and the logical cross-connection information.

In some embodiments, to establish the physical connection, the first node 110A further sends a connection establishment message to a downstream node, where the connection establishment message includes information related to both the physical bandwidth and the physical channel number. The first node 110A then receives a connection establishment complete message, where the connection establishment complete message indicates that the establishment of the physical connection from the first node to the second node is completed. For example, the first node 110A may send the connection establishment message to the downstream node, where the connection establishment message includes the information related to both the physical bandwidth and the physical channel number. The first node 110A then receives the connection establishment complete message from the second node 110C (or 110D) through the downstream node, where the connection establishment complete message indicates that the establishment of the physical connection from the first node to the second node is completed. The downstream nodes of the first node 110A include, for example, the tail node (namely, the second node) 110C (or 110D) and intermediate node 110E or 110F in the embodiment shown in FIG. 1A.

In some embodiments, in response to sending, by the first node 110A, the connection establishment message to the downstream node, the first node 110A pre-deducts a service bandwidth of the physical connection from a logical pipe of the first node 110A. For example, before the connection establishment message is sent to the downstream node (for example, the intermediate node 110E or 110F shown in FIG. 1A), the logical pipe of the first node 110A has an available bandwidth of 10G. The to-be-established physical connection requires a service bandwidth of 1G. In this case, in response to sending, by the first node 110A, the connection establishment message to the downstream node 110E (or 110F), the first node 110A pre-deducts the 1G service bandwidth of the physical connection from the total 10G available bandwidth of the logical pipe of the first node 110A, so that the available bandwidth changes to 9G (=10G-1G).

In some embodiments, the connection establishment message includes the logical tunnel identifier of the logical tunnel, the physical bandwidth, and the physical channel number of the first node 110A.

In some embodiments, the first node 110A further sends the connection establishment complete message to the controller 120. As shown in FIG. 2, the first node 110A sends the connection establishment complete message 203 to the controller 120.

In some embodiments, if the connection establishment complete message is received, the first node 110A may update the logical tunnel. Alternatively or additionally, if the controller 120 fails, the first node 110A may update the logical tunnel. Alternatively or additionally, the first node 110A may periodically update the logical tunnel. For example, in the embodiment shown in FIG. 2, in response to receiving the connection establishment complete message 203, the first node 110A may immediately update the logical tunnel in real time. Alternatively, in response to a failure of the controller 120, the first node 110A may immediately update the logical tunnel in real time. Alternatively, the first node 110A may periodically update the logical tunnel. For example, after receiving the connection establishment complete message 203 or after the controller 120 fails, the first node 110A may periodically update the logical tunnel.

In some embodiments, to update the logical tunnel, the first node 110A searches for the corresponding logical tunnel based on physical ports through which the physical connection passes, recomputes an available bandwidth and a latency that are of the corresponding logical tunnel, and notifies the downstream node (for example, in the embodiment shown in FIG. 1A, the downstream nodes of 110A include the intermediate node 110E or 110F, and the tail node 110C or 110D) of a changed available bandwidth and a changed latency that are of the logical tunnel.

In some embodiments, to periodically update the logical tunnel, the first node 110A may periodically send a logical tunnel update request message to the downstream node. In addition, the first node 110A may receive a logical tunnel update feedback message, where the logical tunnel update feedback message indicates an updated available bandwidth and an updated latency that are of the logical tunnel. Based on the logical tunnel update feedback message, the first node 110A may then update an available bandwidth and a latency that are of the logical tunnel. For example, the first node 110A may periodically send a logical tunnel update request message to the downstream node. The first node 110A may then receive a logical tunnel update feedback message for the logical tunnel update request message through the downstream node, where the logical tunnel update feedback message indicates an updated available bandwidth and an updated latency that are of the logical tunnel. Based on the logical tunnel update feedback message, the first node 110A may then update an available bandwidth and a latency that are of the logical tunnel. For another example, the first node 110A may start a logical tunnel update timer. In response to the start of the logical tunnel update timer, the first node 110A may determine a first to-be-updated available bandwidth and a first latency. The first node 110A may then send a logical tunnel update request message to the downstream node, where the logical tunnel update request message includes the first to-be-updated available bandwidth and the first latency. The first node 110A may then receive a logical tunnel update feedback message for the logical tunnel update request message through the downstream node, where the logical tunnel update feedback message may be from the second node 110C (or 110D) and include a second to-be-updated available bandwidth and a second latency. The first node 110A may then update the available bandwidth and the latency that are of the logical tunnel based on the second to-be-updated available bandwidth and the second latency.

In some embodiments, in response to receiving a service request message from an application side (for example, the enterprise terminal 190A or 190B shown in FIG. 1A), the first node establishes the physical connection based on the logical tunnel. In some embodiments, the service request message may include an address of the second node (for example, the tail node 110C or 110D shown in FIG. 1A), a service bandwidth, and a latency.

In some embodiments, to determine the logical tunnel, the first node 110A may search for a candidate logical tunnel from the first node 110A (or 110B) to the second node (110C or 110D). The first node 110A then determines whether the candidate logical tunnel meets a service requirement required by the physical connection. If the first node 110A determines that the candidate logical tunnel meets the service requirement, the first node 110A determines the candidate logical tunnel as the logical tunnel. For example, the first node 110A may search for a plurality of candidate logical tunnels from the first node 110A to the second node (for example, the tail node 110C or 110D shown in FIG. 1A). For a candidate logical tunnel (each) of the plurality of candidate logical tunnels, the first node 110A may determine whether the candidate logical tunnel meets the service requirement required by the physical connection. If it is determined that the candidate logical tunnel meets the service requirement, the first node 110A may determine the candidate logical tunnel as the logical tunnel. In some embodiments, to determine that the candidate logical tunnel meets the service requirement, the first node 110A may determine that an available bandwidth and a latency that are of the candidate logical tunnel meet the service requirement.

In some embodiments, to determine that a candidate logical tunnel meets the service requirement, the first node 110A may determine that an available bandwidth and a latency that are of the candidate logical tunnel meet the service requirement. For example, the first node 110A may determine that both the available bandwidth and the latency that are of the candidate logical tunnel meet the service requirement, to determine that the candidate logical tunnel meets the service requirement. Alternatively, if there is no candidate logical tunnel whose available bandwidth and latency both meet the service requirement, the first node 110A may feed back the case to the controller 120. Alternatively, if the service requirement does not relate to high-reliability data transmission, the first node 110A may alternatively determine and select a candidate logical tunnel only one of whose available bandwidth and latency meets the service requirement as the logical tunnel.

In some embodiments, the logical tunnel is based on logical labels that are of physical ports of the first node 110A, the second node 110C (or 110D), and the node between the first node 110A and the second node 110C (or 110D) and that are determined by the controller 120, and the logical label is unique in the node.

In some embodiments, the first node 110A may store a correspondence between the logical labels and the physical ports. Alternatively or additionally, the first node 110A may update the correspondence.

In some embodiments, the first node 110A may search for the physical port based on the logical label. Alternatively or additionally, the first node 110A may search for the logical tunnel based on the physical connection.

In some embodiments, the first node 110A may store a correspondence between the logical labels and logical labels of peer logical ports associated with the logical tunnel. Alternatively or additionally, the first node 110A may update the correspondence.

In some embodiments, the first node 110A is connected to a user side, a communication peer node is a cloud node, and the second node is connected to the cloud node. As shown in FIG. 1A, the first node 110A is connected to the user side (for example, the enterprise terminal 190A or 190B), the communication peer node is the cloud node 180A or 180B, and the second node (namely, the tail node 110C or 110C) is connected to the cloud node 180A or 180B.

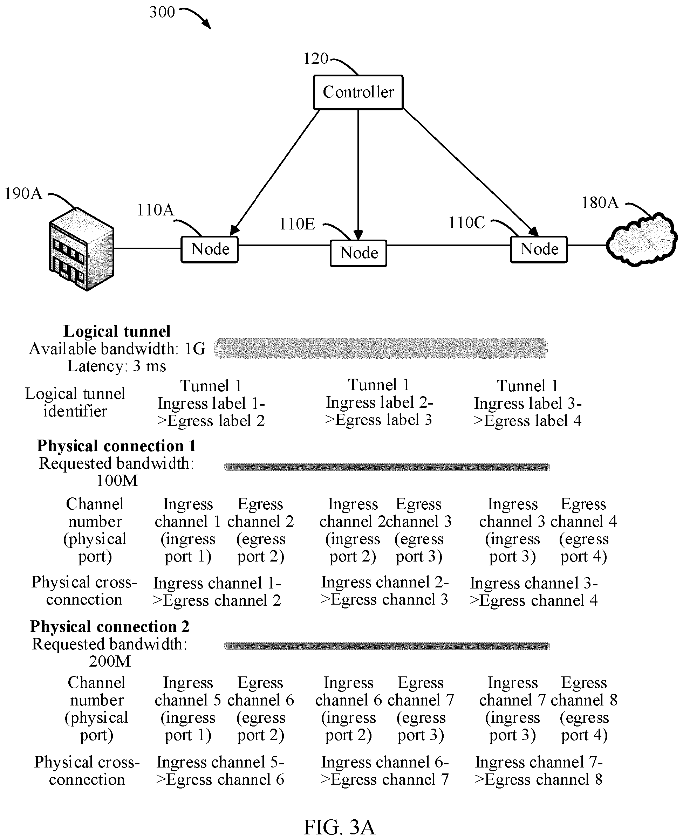

FIG. 3A is a diagram of a connection establishment process 300 according to example implementations of some embodiments of this application. The connection establishment process 300 relates to a controller 120 and a plurality of nodes 110. The plurality of nodes 110 may be, for example, the head nodes 110A and 110B, the tail nodes 110C and 110D, and the intermediate nodes 110E and 110F shown in FIG. 1A. For brevity, only the head node 110A, the tail node 110C, and the intermediate node 110E are shown in this figure. The following describes the connection establishment process 300 with reference to FIG. 1A, FIG. 1B, and FIG. 2.

As shown in FIG. 3A, a controller 120 (specifically, the topology management apparatus 122 in the controller 120 shown in FIG. 1B) configures corresponding logical labels for physical ports of the nodes (for example, the head nodes 110A and 110B, the tail nodes 110C and 110D, and the intermediate nodes 110E and 110F shown in FIG. 1A, where for brevity, only the head node 110A, the tail node 110C, and the intermediate node 110E are shown in this figure), for computation of a logical tunnel. Only one logical label is allocated to each physical port, and a logical label number is unique in each node. In other words, for the nodes, the logical label numbers in the nodes are not repeated.

At each node 110, the logical label is configured and stored, and a correspondence between the logical labels, the physical ports, and peer logical labels is stored. Specifically, a label management apparatus in the node 110 stores a correspondence between the logical labels and physical ports, for searching for the physical port based on the logical label, or searching for the logical label based on the physical port. The label management apparatus in the node 110 stores the logical labels and logical labels of peer logical ports of a link. A remote logical label relationship is configured by the controller 120. For example, an OTN link 1 is connected between the head node 110A and the intermediate node 110E, a physical port that is of the head node 110A and that corresponds to the OTN link 1 is a port 1, a logical label corresponding to the OTN link 1 is a label 1, a physical port that is of the intermediate node 110E and that corresponds to the OTN link 1 is a port 2, and a logical label corresponding to the OTN link 1 is a label 2. In this case, the head node 110A needs to configure and store the label 1 and the label 2, where the label 1 corresponds to the port 1, the label 2 corresponds to the port 2, and a remote end of the label 1 is the label 2.

Based on the logical labels, the controller 120 may compute the logical tunnel. Specifically, a tunnel management apparatus of the controller 120 requests a path computation apparatus (for example, the path computation apparatus 124 shown in FIG. 1B) of the controller 120 to compute a logical tunnel path. The path computation apparatus 124 computes, based on a network-wide topology of an OTN network in which the controller 120 is located, a logical tunnel, for example, from an OTN node (for example, a head node 110A shown in FIG. 3A) connected to a user side (for example, an enterprise terminal 190A shown in FIG. 3A) to an OTN node (for example, a tail node 110C shown in FIG. 3A) connected to a cloud node (for example, a cloud node 1 shown in FIG. 3A). Because the path of the logical tunnel is computed for a group of services with similar requirements, a rule for computing the logical tunnel may be as follows:
- Latency: The path is computed based on a fixed latency of 1-3-10. The latency policy may alternatively be adjusted.
- Available bandwidth computation: A maximum flow algorithm is used to compute a plurality of logical tunnel paths, and a path with a largest available bandwidth is selected. A determining principle may be: computing an available bandwidth of each logical tunnel path, where a smallest remaining bandwidth of remaining bandwidths of all links that the logical tunnel path passes through is the available bandwidth of the logical tunnel path. In all the logical tunnels, a logical tunnel with a largest available bandwidth is used as a logical tunnel that needs to be configured.
- The path computation apparatus (for example, the path computation apparatus 124 in the controller 120 shown in FIG. 1B) responds to the tunnel management apparatus (for example, the tunnel management apparatus 126 in the controller 120 shown in FIG. 1B) of the controller 120 with the logical tunnel path, the logical tunnel latency, and the available bandwidth of the logical tunnel.

After obtaining the logical tunnel through computation, the controller 120 may configure the logical tunnel. Specifically, the controller 120 (more specifically, the tunnel management apparatus 126 of the controller 120) configures the logical tunnel for the head node 110A, and configures a logical cross-connection for each node (for example, the head node 110A, the tail node 110C, and the intermediate node 110E shown in FIG. 3A). More specifically, the controller 120 sends logical tunnel configuration information to the head node 110A, where the logical tunnel configuration information may include information such as a logical tunnel identifier, an available bandwidth, and a latency. The controller 120 further sends logical cross-connection information to each node. The logical cross-connection information includes the logical tunnel identifier, and a relationship of forwarding from ingress logical labels of the head node, the tail node, and the node between the head node and the tail node to egress logical labels of the head node, the tail node, and the node between the head node and the tail node.

Correspondingly, the head node 110A stores the logical tunnel configuration information, and each node stores the logical cross-connection information. Specifically, the tunnel management apparatus 117 of the head node 110A stores the logical tunnel configuration information, where the logical tunnel configuration information may include the logical tunnel identifier, and the available bandwidth and the latency that are of the logical tunnel. A label management apparatus of each node stores the logical cross-connection information, where the logical cross-connection information may include the logical tunnel identifier, and the relationship of forwarding from the ingress logical labels of the head node, the tail node, and the node between the head node and the tail node to the egress logical labels of the head node, the tail node, and the node between the head node and the tail node.

Specifically, in some embodiments, as shown in FIG. 3A, for example, a logical tunnel exists from the head node 110A to the tail node 110C, a path of the logical tunnel is, for example, "head node 110A-intermediate node 110E-tail node 110C", an available bandwidth is 1G, and a latency is 3 ms. As described above, as shown in FIG. 1A, the logical labels corresponding to the physical ingress port 1 and the physical egress port 2 of the head node 110A are respectively the ingress label 1 and the egress label 2; the logical labels corresponding to the physical ingress port 2 and the physical egress port 3 of the intermediate node 110E are respectively the ingress label 2 and the egress label 3; and the logical labels corresponding to the physical ingress port 3 and the physical egress port 4 of the tail node 110C are respectively the ingress label 3 and the egress label 4. An identifier of the logical tunnel, namely, a logical tunnel identifier, is "tunnel 1". As shown in FIG. 3A, a logical cross-connection "ingress label 1->egress label 2" is established at the head node 110A, a logical cross-connection "ingress label 2->egress label 3" is established at the intermediate node 110E, and a logical cross-connection "ingress label 3->egress label 4" is established at the tail node 110C.

After the above logical tunnel is established, if the user side requests to establish, for service data, a service connection (for example, a physical connection 1 shown in FIG. 3A) with a bandwidth of 100M and a tail node being the node 110C, because 100M (the requested service bandwidth)<1G (the available bandwidth of the tunnel 1), that is, the head node 110A may directly use a path of the established logical tunnel (namely, the tunnel 1) to provide the required physical connection with the service bandwidth (100M). Therefore, the head node 110A allocates a physical channel number to the physical connection 1. For example, an ingress channel 1 and an egress channel 2 are respectively allocated to the physical ingress port 1 and the physical egress port 2 of the head node 110A, an ingress channel 2 and an egress channel 3 are respectively allocated to the physical ingress port 2 and the physical egress port 3 of the intermediate node 110E, and an ingress channel 3 and an egress channel 4 are respectively allocated to the physical ingress port 3 and the physical egress port 4 of the tail node 110C. In addition, a physical cross-connection "ingress channel 1->egress channel 2" is established at the head node 110A, a physical cross-connection "ingress channel 2->egress channel 3" is established at the intermediate node 110E, and a physical cross-connection "ingress channel 3->egress channel 4" is established at the tail node 110C. After the physical connection 1 is established, the available bandwidth of the tunnel 1 changes to 900M (=1G-100M).

Subsequently, if the user side continues to request to establish, for other service data, a service connection (for example, a physical connection 2 shown in FIG. 3A) with a bandwidth of 200M and a tail node also being the node 110C, because 200M (the requested service bandwidth)<900M (the current available bandwidth of the tunnel 1), that is, the head node 110A may directly use the path of the established logical tunnel (namely, the tunnel 1) to provide the required physical connection with the service bandwidth (200M). Therefore, the head node 110A allocates a physical channel number to the physical connection 2. For example, an ingress channel 5 and an egress channel 6 are respectively allocated to the physical ingress port 1 and the physical egress port 2 of the head node 110A, an ingress channel 6 and an egress channel 7 are respectively allocated to the physical ingress port 2 and the physical egress port 3 of the intermediate node 110E, and an ingress channel 7 and an egress channel 8 are respectively allocated to the physical ingress port 3 and the physical egress port 4 of the tail node 110C. In addition, a physical cross-connection "ingress channel 5->egress channel 6" is established at the head node 110A, a physical cross-connection "ingress channel 6->egress channel 7" is established at the intermediate node 110E, and a physical cross-connection "ingress channel 7->egress channel 8" is established at the tail node 110C. After the physical connection 2 is established, the available bandwidth of the tunnel 1 changes to 700M (=900M-200M).

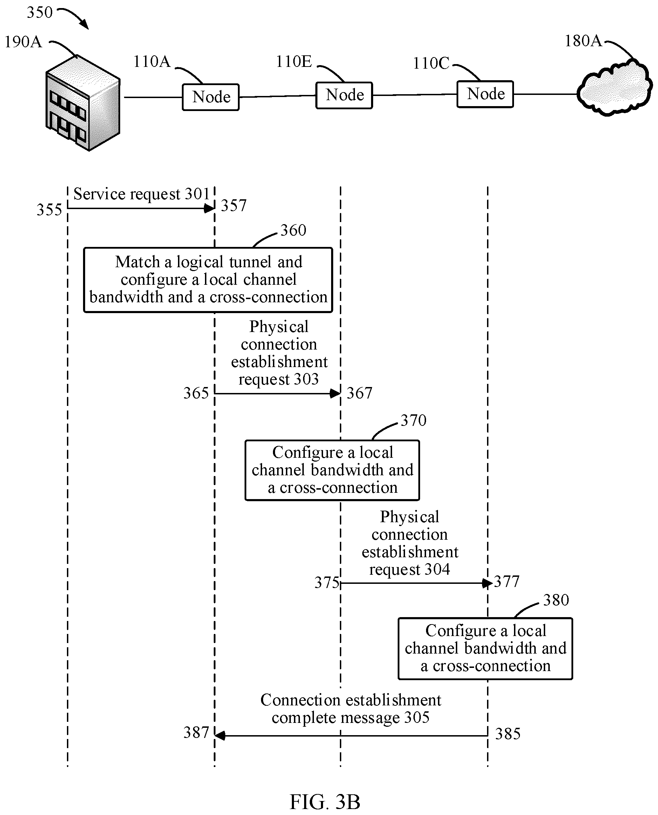

FIG. 3B is a diagram of a connection establishment process 350 according to example implementations of some embodiments of this application. The connection establishment process 350 relates to a plurality of nodes 110. The plurality of nodes 110 may be, for example, the head nodes 110A and 110B, the tail nodes 110C and 110D, and the intermediate nodes 110E and 110F shown in FIG. 1A. For brevity, only the head node 110A, the tail node 110C, and the intermediate node 110E are shown in this figure. The following describes the connection establishment process 350 with reference to FIG. 1A, FIG. 1B, and FIG. 2.

As shown in FIG. 3B, a user side (for example, an enterprise terminal 190A) sends (355) a service request 301 to the head node 110A, to request to establish a physical connection for service data transmission. The service request 301 may be, for example, a service bandwidth request message, and is used to request a service bandwidth from the head node 110A.

The head node 110A receives (357) the service request 301, searches for a logical tunnel, and starts establishment of the physical connection. Specifically, a connection management apparatus 119 of the head node 110A receives the service request 301, and matches (360) the corresponding logical tunnel with a tunnel management apparatus 117 of the head node 110A based on an address of a cloud node (for example, a cloud node 180A shown in FIG. 3B) or an address of a communication peer node (for example, a tail node 110C shown in FIG. 3B), a bandwidth, and a latency that are included in the service request 301. After successful matching (360) to the logical tunnel, the tunnel management apparatus 117 of the head node 110A responds to the connection management apparatus 119 of the head node 110A with a logical tunnel identifier (for example, "tunnel 1" in the embodiment shown in FIG. 1A) of the successfully matched logical tunnel.

After the connection management apparatus 119 of the head node 110A receives the logical tunnel identifier of the successfully matched logical tunnel, a physical connection apparatus of the head node 110A sends a physical connection establishment request to a signaling protocol apparatus of the head node 110A, where the physical connection establishment request carries the logical tunnel identifier and an actual service bandwidth.

Each node (including the head node 110A) then completes establishment of an end-to-end physical connection. Specifically, after the signaling protocol apparatus of each node 110 receives the physical connection establishment request, the signaling protocol apparatus requests a label management apparatus of the node 110 to allocate a physical channel number and configure a physical bandwidth and a physical cross-connection. For the allocation of the physical channel number, and configuration of the physical bandwidth and the physical cross-connection, reference may be made to the descriptions of the embodiment in FIG. 1A.

At 360, the label management apparatus of the head node 110A further allocates a physical channel number and a physical bandwidth that are of a local physical port, and establishes a physical cross-connection. Specifically, the label management apparatus of the head node 110A searches for an ingress logical label and an egress logical label based on the logical tunnel identifier, searches for the corresponding physical port based on the ingress logical label and the egress logical label, and allocates the physical channel number based on the physical port. To be specific, the ingress logical label and the egress logical label are searched for based on the logical tunnel identifier, and then a cross-connection between a physical ingress channel and a physical egress channel is established based on the allocated physical channel number. Because a physical channel number of the physical egress channel needs to be the same as that of a physical port of a remote node (for example, in the embodiment shown in FIG. 3B, for the head node 110A, the tail node 110C is a remote node of the head node 110A), allocation may be performed according to a big-end and small-end allocation principle. To be specific, if an identifier of a node is small, the allocation starts from a small channel number; otherwise, the allocation starts from a large channel number. A physical channel number and a physical bandwidth are configured after the allocation.

In addition, the signaling protocol apparatus of each node 110 sends the physical connection establishment request to a downstream node (for example, in the embodiment shown in FIG. 3, for the head node 110A, the intermediate node 110E and the tail node 110C are downstream nodes of the head node 110A; and for the intermediate node 110E, the tail node 110C is a downstream node of the intermediate node 110E), and the downstream node completes local configuration. Specifically, after the bandwidth and the cross-connection are configured, the label management apparatus of the head node 110A responds to the signaling protocol apparatus of the head node 110A with the bandwidth and the cross-connection, and the signaling protocol apparatus of the head node 110A sends (365) a physical connection establishment request 303 to the downstream node, namely, the node 110E, where the physical connection establishment request 303 carries the logical tunnel identifier, the bandwidth, and a locally allocated physical egress channel number. The node 110E receives (367) the physical connection establishment request 303, and the signaling protocol apparatus of the node 110E requests the label management apparatus of the node 110E to complete the local configuration, where the request includes parameters such as the logical tunnel identifier and the physical egress channel number allocated by the upstream. The processing performed by the label management apparatus of the node 110E is similar to that performed by the head node 110A, and a main difference lies in that a physical ingress channel number of the node 110E needs to be the same as the physical egress channel number allocated by the upstream. For this, reference may be made to the descriptions of the embodiment shown in FIG. 1A. Details are not described herein again.

At the node 110E, a local channel bandwidth and a physical cross-connection that are of the node 110E are configured (370). The processing process is similar to that of 360. For details, refer to the descriptions of 360. After the node 110E locally completes establishment of the physical connection, the signaling protocol apparatus of the node 110E sends (375) a physical connection establishment request 304 to the downstream node, namely, the tail node 110C, where the physical connection establishment request 304 carries the logical tunnel identifier, the bandwidth, and the locally allocated physical egress channel number. The tail node 110C receives (377) the physical connection establishment request 304, and the signaling protocol apparatus of the tail node 110C requests the label management apparatus of the tail node 110C to complete local configuration, where the request includes parameters such as the logical tunnel identifier and the physical egress channel number allocated by the upstream.

At the tail node 110C, a local channel bandwidth and a physical cross-connection of the tail node 110C are configured (380). The processing process is similar to that of 360. For details, refer to the descriptions of 360. After the tail node 110C locally completes establishment of the physical connection, the tail node 110C sends a connection establishment complete message 305 to the head node 110A, to notify the head node 110 that the establishment of the physical connection is completed. The connection establishment complete message 305 is equivalent to the connection establishment complete message 203 shown in FIG. 2. Specifically, after the downstream node and the tail node (for example, other nodes except the head node 110A in this embodiment, namely, the intermediate node 110E and the tail node 110C) complete the configuration of the local physical bandwidth and the cross-connection according to the foregoing processing procedure, the signaling protocol apparatus of the tail node 110C sends the connection establishment complete message 305 to the signaling protocol apparatus of the head node 110A through the signaling protocol apparatus of the intermediate node 110E, to notify the head node 110A that the establishment of the physical connection is completed.

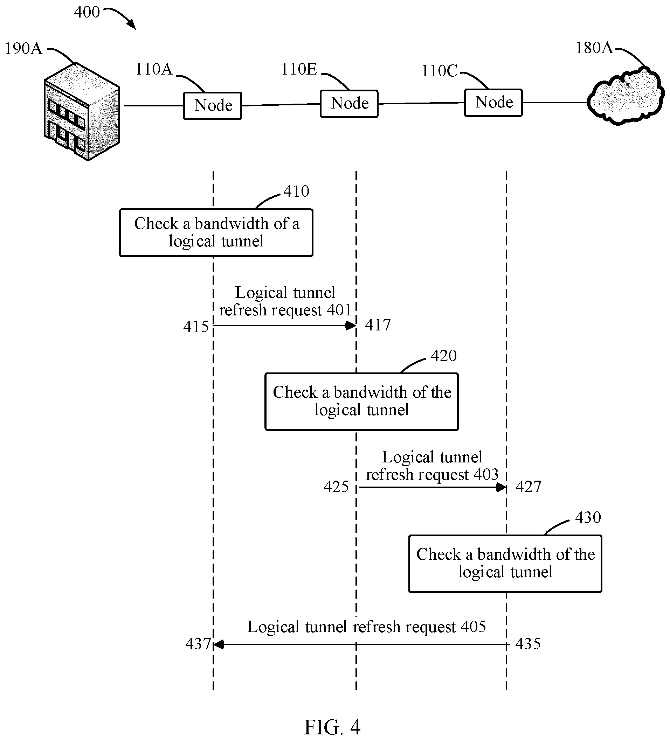

After the establishment of the physical connection is completed, the physical ports are used by a plurality of physical connections, and each physical connection may not correspond to a same logical tunnel. Therefore, bandwidths of all related logical tunnels need to be updated to ensure accuracy of the bandwidths of the logical tunnels. This is further described below with reference to FIG. 4.

FIG. 4 is a diagram of a connection establishment process 400 according to example implementations of some embodiments of this application. The connection establishment process 400 relates to a controller 120 and a plurality of nodes. The plurality of nodes may be, for example, the head nodes 110A and 110B, the tail nodes 110C and 110D, and the intermediate nodes 110E and 110F shown in FIG. 1A. For brevity, only the head node 110A, the tail node 110C, and the intermediate node 110E are shown in this figure. The following describes the connection establishment process 400 with reference to FIG. 1A, FIG. 1B, and FIG. 2.

After the head node 110A receives a connection establishment complete message, a connection management apparatus 119 of the head node 110A may send the connection establishment complete message (for example, the connection establishment complete message 203 shown in FIG. 2 or the connection establishment complete message 305 shown in FIG. 3B) to the controller 120, to notify a connection management apparatus of the controller 120 that establishment of a physical connection is completed, where the connection establishment complete message carries a path and bandwidth information that are of the established physical connection.

In response to receiving the connection establishment complete message, the connection management apparatus 128 of the controller 120 may notify a tunnel management apparatus 126 of the controller 120 that an available bandwidth of a logical tunnel needs to be refreshed. Specifically, the tunnel management apparatus 126 of the controller 120 searches for all corresponding logical tunnels based on physical ports through which a physical path corresponding to the physical connection passes, and requests a path computation apparatus 124 (of the controller 120) to recompute available bandwidths of all the logical tunnels, where paths of the logical tunnels remain unchanged. After the path computation apparatus 124 completes the recomputation, the tunnel management apparatus 126 notifies each node (for example, a head node 110A, a tail node 110C, and an intermediate node 110E shown in FIG. 4) of a changed available bandwidth of the logical tunnel.

The tunnel management apparatus 117 of each node then refreshes the available bandwidth of the current logical tunnel. A method for refreshing the logical tunnel is described above. Details are not described herein again.

Additionally or alternatively, to prevent the controller 120 from not refreshing the logical tunnel in time or prevent a failure of the controller 120 to refresh the logical tunnel, the head node (or referred to as a "first node") 110A may refresh the logical tunnel in real time or periodically (including refreshing information such as a bandwidth and a latency that are of the logical tunnel).

Specifically, for example, in the embodiment shown in FIG. 3B, after receiving the connection establishment complete message 305 from the tail node 110C, the tunnel management apparatus 117 of the head node 110A may immediately refresh the corresponding logical tunnel in real time, for example, refresh information such as an available bandwidth and a latency that are of the corresponding logical tunnel in real time.

Alternatively, the head node (for example, the head node 110A) of the logical tunnel immediately refreshes the logical tunnel in real time after sensing a failure of the controller 120.

Alternatively, the head node (for example, the head node 110A) of the logical tunnel periodically refreshes the logical tunnel. Specifically, the head node 110A may start a logical tunnel refresh timer, send a logical tunnel update request message to a downstream node, receive a logical tunnel update feedback message for the logical tunnel update request message, and then update the available bandwidth and the latency that are of the logical tunnel based on the logical tunnel update feedback message. In some embodiments, the head node 110A may start the logical tunnel refresh timer. After the logical tunnel refresh timer is started:
- The tunnel management apparatus 117 of the head node 110A requests the label management apparatus of the head node 110A to check the available bandwidth. A label management apparatus of the head node 110A searches for a corresponding physical port and a remaining bandwidth based on a logical port identifier, and if the remaining bandwidth is smaller than the available bandwidth of the logical tunnel, responds to the tunnel management apparatus 117 of the head node 110A with the case. The tunnel management apparatus 117 of the head node 110A sets the bandwidth as a to-be-refreshed available bandwidth.
- The tunnel management apparatus 117 of the head node 110A sends a message to request the signaling protocol apparatus of the head node 110A to check available bandwidths of downstream nodes (for example, the intermediate node 110E and then the tail node 110C), where the message carries the to-be-refreshed available bandwidth. After receiving the message, the intermediate node 110E refreshes the to-be-refreshed available bandwidth according to the foregoing processing procedure, and further sends a message to the tail node 110C that serves as a downstream node of the intermediate node 110E, to check the available bandwidth of the tail node 110C. After receiving the message, the tail node 110C refreshes the to-be-refreshed available bandwidth according to the foregoing processing procedure.
- After the tail node 110C refreshes the to-be-refreshed available bandwidth, the signaling protocol apparatus of the tail node 110C notifies the head node 110A of the to-be-refreshed available bandwidth through the signaling protocol apparatus of the intermediate node 110E, and then the head node 110A may refresh the available bandwidth of the logical tunnel based on the to-be-refreshed available bandwidth.

Refer to FIG. 4. In the process of refreshing the logical tunnel initiated by the head node 110A, the head node 110A checks (410) the bandwidth of the local logical tunnel. For example, for a logical tunnel whose path is "head node 110A→node 110E→tail node 110C" and initial available bandwidth is 100G, when the logical tunnel is refreshed, the head node 110A checks that an available bandwidth of the head node 110A is, for example, 10G, and does not know respective available bandwidths of the downstream nodes, namely, the node 110E and the tail node 110C. Therefore, because 10G (the available bandwidth of the head node 110A)<100G (the initial (before refresh) available bandwidth of the logical tunnel), the head node 110A temporarily specifies the bandwidth of the logical tunnel to 10G, sends (415) a logical tunnel refresh request 401 to the node 110E, notifies the node 110E of the available bandwidth 10G temporarily specified by the head node 110A in the logical tunnel refresh request 401, and requests the node 110E to check and update the available bandwidth of the logical tunnel. The node 110E receives (417) the logical tunnel refresh request 401, and the node 110E checks (420) that an available bandwidth of the node 110E is, for example, 8G. Because 8G (the available bandwidth of the node 110E)<10G (the current temporarily-specified available bandwidth of the logical tunnel), the node 110E temporarily specifies the available bandwidth of the logical tunnel to 8G (namely, the smaller one between the available bandwidth of the node 110E and the current temporarily-specified available bandwidth), sends (425) a logical tunnel refresh request 403 to the downstream node of the node 110E, namely, the tail node 110C, notifies the tail node 110C of the available bandwidth 8G temporarily specified by the node 110E in the logical tunnel refresh request 403, and requests the tail node 110C to check and update the available bandwidth of the logical tunnel. The tail node 110C receives (427) the logical tunnel refresh request 403, and the tail node 110C checks (430) an available bandwidth of the tail node 110C for the logical tunnel. For example, if the available bandwidth of the tail node 110C is only 7G, because 7G (the available bandwidth of the tail node 110C)<8G (the current temporarily-specified available bandwidth of the logical tunnel), the tail node 110C determines that the available bandwidth of the logical tunnel is 7G, and sends (435) a logical tunnel refresh request 405 to the head node 110A, where the logical tunnel refresh request 405 indicates that the available bandwidth of the logical tunnel is 7G. For example, the tail node 110C may send (435) the logical tunnel refresh request 405 to the head node 110A through the intermediate node 110E, to request the head node 110A to refresh the available bandwidth of the logical tunnel to 7G. The head node 110A receives (437) the logical tunnel refresh request 405, and refreshes the available bandwidth of the logical tunnel in response to the logical tunnel refresh request 405, for example, refreshes the available bandwidth to 7G in this example. In other words, the available bandwidth of the logical tunnel depends on a smallest available bandwidth in the available bandwidth of the logical tunnel before refreshing and available bandwidths of the nodes on the logical tunnel.

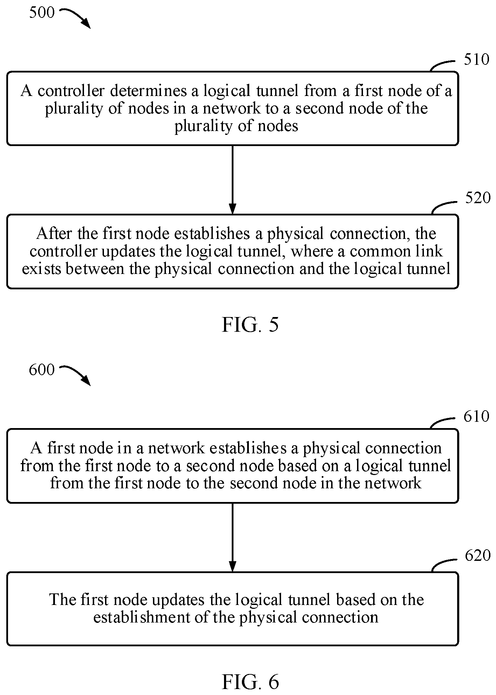

FIG. 5 is a flowchart of a method 500 implemented at a controller according to some embodiments of this application. In a possible implementation, the method 500 may be implemented by the controller 120 in the communication system 100. In another possible implementation, the method 500 may alternatively be implemented by another electronic apparatus independent of the communication system 100. For example, the method 500 is described below by using an example in which the method is implemented by the controller 120 in the communication system 100.

At 510, the controller (for example, the controller 120 shown in FIG. 1A) determines a logical tunnel from a first node (for example, the head node 110A (or 110B) shown in FIG. 1A) of a plurality of nodes in a network to a second node (for example, the tail node 110C (or 110D) shown in FIG. 1A) of the plurality of nodes. At 520, after the first node establishes a physical connection, the controller 120 updates the logical tunnel, where a common link exists between the physical connection and the logical tunnel. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in a process of determining the logical tunnel, the controller 120 may allocate corresponding logical labels to the first node, the second node, and a node (for example, the intermediate node 110E or 110F shown in FIG. 1A) between the first node and the second node. Based on the logical labels, the controller 120 may then compute a logical tunnel path from the first node to the second node. Based on the logical tunnel path, the controller 120 may then determine the logical tunnel from the first node to the second node. In this way, a path does not need to be computed for each physical connection, and to obtain a physical connection path, it only needs to search for a corresponding logical tunnel path, so that the physical connection can be quickly established.

In some embodiments, in a process of allocating a corresponding logical label to a node, the controller 120 allocates a corresponding logical label to a physical port of the node, where the logical label is unique in the node. In this way, a path does not need to be computed for each physical connection, and to obtain a physical connection path, it only needs to search for a corresponding logical tunnel path, so that the physical connection can be quickly established.

In some embodiments, in a process of determining the logical tunnel from the first node to the second node, the controller 120 may determine logical tunnel configuration information of the logical tunnel, where the logical tunnel configuration information may include a logical tunnel identifier, an available bandwidth, and a logical tunnel latency that are of the logical tunnel. In addition, the controller 120 may further determine logical cross-connection information of the logical tunnel, where the logical cross-connection information may include the logical tunnel identifier, and a relationship of forwarding from ingress logical labels of the first node, the second node, and the node between the first node and the second node to egress logical labels of the first node, the second node, and the node between the first node and the second node. In this way, a path does not need to be computed for each physical connection, and to obtain a physical connection path, it only needs to search for a corresponding logical tunnel path, so that the physical connection can be quickly established.

In some embodiments, the controller 120 further sends the logical tunnel configuration information to the first node, and sends the logical cross-connection information to the first node, the second node, and the node between the first node and the second node. In this way, a path does not need to be computed for each physical connection, and to obtain a physical connection path, it only needs to search for a corresponding logical tunnel path, so that the physical connection can be quickly established.

In some embodiments, in a process of computing the logical tunnel path, the controller 120 computes the logical tunnel path from the first node to the second node based on network topology information. In this way, a path does not need to be computed for each physical connection, and to obtain a physical connection path, it only needs to search for a corresponding logical tunnel path, so that the physical connection can be quickly established.

In some embodiments, in a process of computing the logical tunnel path based on the network topology information, the controller 120 computes a plurality of candidate logical tunnel paths from the first node to the second node based on the network topology information; and determines a candidate logical tunnel path of the plurality of candidate logical tunnel paths as the logical tunnel path based on at least one of available bandwidths and latencies of the plurality of candidate logical tunnel paths. In this way, a path does not need to be computed for each physical connection, and to obtain a physical connection path, it only needs to search for a corresponding logical tunnel path, so that the physical connection can be quickly established.

In some embodiments, the controller 120 may further store the logical tunnel configuration information and the logical cross-connection information. Alternatively or additionally, the controller 120 may further update the logical tunnel configuration information and the logical cross-connection information. In this way, a path does not need to be computed for each physical connection, and to obtain a physical connection path, it only needs to search for a corresponding logical tunnel path, so that the physical connection can be quickly established.

In some embodiments, the controller 120 may further receive a connection establishment complete message, where the connection establishment complete message indicates that the establishment of the physical connection between the first node and the second node is completed. In this way, a path does not need to be computed for each physical connection, and to obtain a physical connection path, it only needs to search for a corresponding logical tunnel path, so that the physical connection can be quickly established.

In some embodiments, the connection establishment complete message includes a path and bandwidth information that are of the physical connection. In this way, the logical tunnel can be updated in real time, thereby improving reliability of establishing a suitable physical connection, and further improving system performance.

In some embodiments, in a process of updating the logical tunnel, if the connection establishment complete message is received, the controller 120 updates the logical tunnel corresponding to the physical connection. Alternatively or additionally, the controller 120 may periodically update the logical tunnel corresponding to the physical connection. In this way, a path does not need to be computed for each physical connection, and to obtain a physical connection path, it only needs to search for a corresponding logical tunnel path, so that the physical connection can be quickly established.

In some embodiments, in a process of updating the logical tunnel corresponding to the physical connection, the controller 120 may update the available bandwidth and the latency that are of the logical tunnel, and notify the first node of an updated available bandwidth and an updated latency that are of the logical tunnel. In this way, a path does not need to be computed for each physical connection, and to obtain a physical connection path, it only needs to search for a corresponding logical tunnel path, so that the physical connection can be quickly established.

In some embodiments, in a process of updating the available bandwidth and the latency that are of the logical tunnel, the controller 120 may search for the corresponding logical tunnel based on physical ports through which the physical connection passes, and recompute and update the available bandwidth and the latency that are of the corresponding logical tunnel. In this way, a physical connection can be quickly established for a cloud service requirement on an application side.

In some embodiments, the logical tunnel does not occupy a physical bandwidth, and the logical tunnel corresponds to a plurality of physical connections. In this way, a path does not need to be computed for each physical connection, and to obtain a physical connection path, it only needs to search for a corresponding logical tunnel path, so that the physical connection can be quickly established.

FIG. 6 is a flowchart of a method 600 implemented at a first node according to some embodiments of this application. In a possible implementation, the method 600 may be implemented by the head node 110A in the communication system 100. In another possible implementation, the method 600 may alternatively be implemented by another electronic apparatus independent of the communication system 100. For example, the method 600 is described below by using an example in which the method is implemented by the head node 110A in the communication system 100.

At 610, a first node (for example, the first node 110A (or 110B) shown in FIG. 1A) in a network establishes, based on a logical tunnel from the head node 110A to a second node (for example, the tail node 110C (or 110D) shown in FIG. 1A) in the network, a physical connection from the first node 110A to the second node. At 620, the first node 110A updates the logical tunnel based on the establishment of the physical connection. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in a process of updating the logical tunnel, the first node 110A may receive logical tunnel update configuration information from a controller (for example, the controller 120 shown in FIG. 1A) in the network, and update the logical tunnel based on the logical tunnel update configuration information. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in a process of establishing the physical connection based on the logical tunnel, the first node 110A allocates a physical channel number and a physical bandwidth to the physical connection based on the logical tunnel. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in a process of determining the logical tunnel, the first node 110A may receive logical tunnel configuration information of the logical tunnel from the controller in the network, where the logical tunnel configuration information includes a logical tunnel identifier, an available bandwidth, and a logical tunnel latency that are of the logical tunnel. In addition, the first node 110A may receive logical cross-connection information of the logical tunnel from the controller, where the logical cross-connection information includes the logical tunnel identifier, and a relationship of forwarding from ingress logical labels of the first node, the second node, and a node between the first node and the second node to egress logical labels of the first node, the second node, and the node between the first node and the second node. The first node 110A may then determine the logical tunnel based on the logical tunnel configuration information and the logical cross-connection information. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in a process of establishing the physical connection based on the logical tunnel, the first node 110A may further send a connection establishment message to a downstream node, where the connection establishment message includes information related to both the physical bandwidth and the physical channel number. The first node 110A may then receive a connection establishment complete message from the second node, where the connection establishment complete message indicates that the establishment of the physical connection from the first node 110A to the second node is completed. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, in response to sending, by the first node 110A, the connection establishment message to the downstream node, the first node 110A may pre-deduct a service bandwidth of the physical connection from a logical pipe of the first node 110A. In this way, information that needs to be carried in signaling can be greatly reduced, and the physical connection can be quickly established, thereby meeting a requirement of a cloud service for high real-time performance.

In some embodiments, the connection establishment message includes the logical tunnel identifier of the logical tunnel, the physical bandwidth, and the physical channel number of the first node 110A. In this way, information that needs to be carried in signaling can be greatly reduced, and the physical connection can be quickly established, thereby meeting a requirement of a cloud service for high real-time performance.

In some embodiments, the first node 110A further sends the connection establishment complete message (for example, the connection establishment complete message 203 shown in FIG. 2) to the controller. In this way, information that needs to be carried in signaling can be greatly reduced, and the physical connection can be quickly established, thereby meeting a requirement of a cloud service for high real-time performance.

In some embodiments, in response to receiving the connection establishment complete message, the first node 110A may update the logical tunnel. Alternatively or additionally, in response to a failure of the controller, the first node 110A may update the logical tunnel. Alternatively or additionally, the first node 110A may periodically update the logical tunnel. In this way, information that needs to be carried in signaling can be greatly reduced, and the physical connection can be quickly established, thereby meeting a requirement of a cloud service for high real-time performance.

In some embodiments, in a process of updating the logical tunnel, the first node 110A may search for the corresponding logical tunnel based on physical ports through which the physical connection passes, recompute the available bandwidth and the latency that are of the logical tunnel, and notify the downstream node of a changed available bandwidth and a changed latency that are of the logical tunnel. In this way, information that needs to be carried in signaling can be greatly reduced, and the physical connection can be quickly established, thereby meeting a requirement of a cloud service for high real-time performance.

In some embodiments, in a process of periodically updating the logical tunnel, the first node 110A may periodically send a logical tunnel update request message to the downstream node, receive a logical tunnel update feedback message (where the logical tunnel update feedback message indicates an updated available bandwidth and an updated latency that are of the logical tunnel), and update the available bandwidth and the latency that are of the logical tunnel based on the logical tunnel update feedback message. Specifically, in a process of periodically updating the logical tunnel, the first node 110A may start a logical tunnel update timer, and in response to the start of the logical tunnel update timer, the first node 110A determines a first to-be-updated available bandwidth and a first latency. The first node 110A then sends a logical tunnel update request message to the downstream node, where the logical tunnel update request message includes the first to-be-updated available bandwidth and the first latency. The first node 110A then receives a second to-be-updated available bandwidth and a second latency from the second node through the downstream node, and updates the available bandwidth and the latency that are of the logical tunnel based on the second to-be-updated available bandwidth and the second latency. In this way, information that needs to be carried in signaling can be greatly reduced, and the physical connection can be quickly established, thereby meeting a requirement of a cloud service for high real-time performance.

In some embodiments, in response to receiving a service request message from an application side (for example, the enterprise terminal 190A or 190B shown in FIG. 1A), the first node 110A establishes the physical connection based on the logical tunnel. In this way, information that needs to be carried in signaling can be greatly reduced, and the physical connection can be quickly established, thereby meeting a requirement of a cloud service for high real-time performance.

In some embodiments, the service request message may include an address of the second node (for example, the tail node 110C or 110D shown in FIG. 1A), a service bandwidth, and a latency. In this way, information that needs to be carried in signaling can be greatly reduced, and the physical connection can be quickly established.

In some embodiments, in a process of determining the logical tunnel, the first node 110A searches for a candidate logical tunnel from the first node 110A to the second node, and determines whether the candidate logical tunnel meets a service requirement required by the physical connection. If the first node 110A determines that the candidate logical tunnel meets the service requirement, the first node 110A determines the candidate logical tunnel as the logical tunnel. In some embodiments, in a process of determining the logical tunnel, the first node 110A may search for a plurality of candidate logical tunnels from the first node to the second node. For a candidate logical tunnel of the plurality of candidate logical tunnels, the first node 110A then determines whether the candidate logical tunnel meets a service requirement required by the physical connection. If the first node 110A determines that the candidate logical tunnel meets the service requirement, the first node 110A determines the candidate logical tunnel as the logical tunnel. In this way, information that needs to be carried in signaling can be greatly reduced, and the physical connection can be quickly established, thereby meeting a requirement of a cloud service for high real-time performance.

In some embodiments, in a process of determining that the candidate logical tunnel meets the service requirement, the first node 110A may determine that an available bandwidth and a latency that are of the candidate logical tunnel meet the service requirement. In this way, information that needs to be carried in signaling can be greatly reduced, and the physical connection can be quickly established, thereby meeting a requirement of a cloud service for high real-time performance.

In some embodiments, the logical tunnel is based on logical labels that are of physical ports of the first node 110A, the second node, and the node between the first node 110A and the second node and that are determined by the controller, and the logical label is unique in the node. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, the first node 110A may store a correspondence between the logical labels and the physical ports. Alternatively or additionally, the first node may update the correspondence. In this way, information that needs to be carried in signaling can be greatly reduced, and the physical connection can be quickly established, thereby meeting a requirement of a cloud service for high real-time performance.

In some embodiments, the first node 110A may search for the physical port based on the logical label. Alternatively or additionally, the first node 110A may search for the logical tunnel based on the physical connection. In this way, a path does not need to be computed for each physical connection, and to obtain a physical connection path, it only needs to search for a corresponding logical tunnel path, so that information that needs to be carried in signaling can be greatly reduced, and the physical connection can be quickly established, thereby meeting a requirement of a cloud service for high real-time performance.

In some embodiments, the first node 110A may store a correspondence between the logical labels and logical labels of peer logical ports associated with the logical tunnel. Alternatively or additionally, the first node 110A may update the correspondence. In this way, information that needs to be carried in signaling can be greatly reduced, and the physical connection can be quickly established, thereby meeting a requirement of a cloud service for high real-time performance.

In some embodiments, the first node 110A is connected to a user side, a communication peer node is a cloud node (for example, the cloud node 180A or 180B shown in FIG. 1A), and the second node is connected to the cloud node. In this way, information that needs to be carried in signaling can be greatly reduced, and the physical connection can be quickly established, thereby meeting a requirement of a cloud service for high real-time performance.

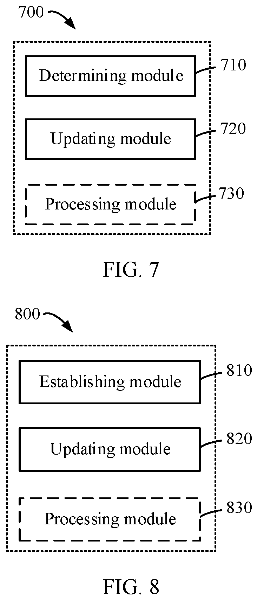

FIG. 7 is a block diagram of a first communication apparatus 700 according to some embodiments of this application. The first communication apparatus 700 may be implemented as a device or a chip in the device, and the scope of this application is not limited in this aspect. The first communication apparatus 700 may include a plurality of modules, configured to perform corresponding steps in the method 500 discussed in FIG. 5. The first communication apparatus 700 may be implemented as the controller 120 shown in FIG. 1 or a part of the controller 120.

As shown in FIG. 7, the first communication apparatus 700 includes a determining module 710 and an updating module 720. In some embodiments, the first communication apparatus 1000 may further include a processing module 730. The determining module 710 is configured to determine data, the updating module 720 is configured to update data, and the processing module 730 is configured to process data. For example, the determining module 710 is configured to determine a logical tunnel from a first physical port of a first node (for example, the head node 110Ain FIG. 1A) to a second physical port of a second node (for example, the tail node 110C in FIG. 1A). The updating module 720 is configured to update the logical tunnel. The processing module 730 may be configured to send logical tunnel configuration information to the first node, and send logical cross-connection information to all nodes between the first node and the second node. For specific content, refer to the descriptions in FIG. 2 and FIG. 5. Details are not described herein again.

FIG. 8 is a block diagram of a second communication apparatus 800 according to some other embodiments of this application. The second communication apparatus 800 may be implemented as a device or a chip in the device, and the scope of this application is not limited in this aspect. The second communication apparatus 800 may include a plurality of modules, configured to perform corresponding steps in the method 600 discussed in FIG. 6. The second communication apparatus 800 may be implemented as the first node (for example, the head node 110A) shown in FIG. 1 or a part of the first node.

As shown in FIG. 8, the second communication apparatus 800 includes an establishing module 810 and an updating module 820. In some embodiments, the second communication apparatus 800 may further include a processing module 830. The establishing module 810 is configured to establish a physical connection, the updating module 820 is configured to update a logical tunnel, and the processing module 830 is configured to process data. For example, the establishing module 810 is configured to establish, by the first node based on a logical tunnel from a first physical port of the first node to a second physical port of a second node, a physical connection from the first physical port to the second physical port. The updating module 820 is configured to update, by the first node, the logical tunnel based on the establishment of the physical connection. In some embodiments, the processing module 830 is configured to pre-deduct a service bandwidth of the physical connection from a logical pipe of the first node in response to sending, by the first node, a connection establishment message to a downstream node. For specific content, refer to the descriptions in FIG. 2 and FIG. 6. Details are not described herein again.

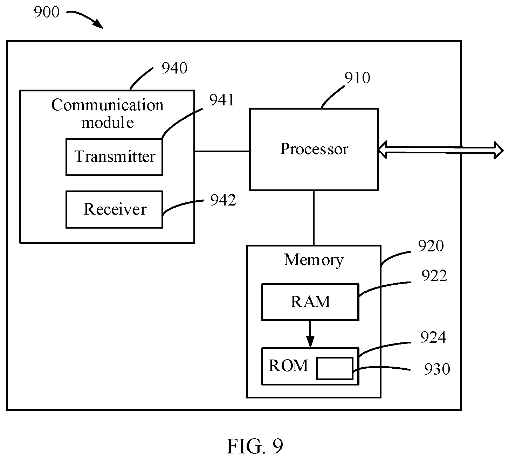

FIG. 9 is a simplified block diagram of an example device 900 suitable for implementing an embodiment of this application. The device 900 may be configured to implement the controller 120, the head node 110A, or the communication system 100 shown in FIG. 1. As shown in the figure, the device 900 includes one or more processors 910, one or more memories 920 coupled to the processor 910, and a communication module 940 coupled to the processor 910. In some embodiments, the memory 920 and the processor 910 may be integrated together.

The communication module 940 may be configured for bidirectional communication. The communication module 940 may include a transmitter 941 configured to send data and a receiver 942 configured to receive data.

The processor 910 may be of any type suitable for a local technology network, and may include but is not limited to at least one of the following: a general-purpose computer, a dedicated computer, a microcontroller, a digital signal processor (Digital Signal Processor, DSP), or one or more processors in a controller-based multi-core controller architecture. The device 900 may have a plurality of processors, such as an application-specific integrated circuit chip, which in time belongs to a clock synchronized with a main processor.

The memory 920 may include one or more non-volatile memories and one or more volatile memories. Examples of the non-volatile memory include but are not limited to at least one of the following: a read-only memory (Read-Only Memory, ROM) 924, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. Examples of the volatile memory include but are not limited to at least one of the following: a random access memory (Random Access Memory, RAM) 922, or another volatile memory that does not persist for duration of a power failure.

A computer program 930 includes computer-executable instructions performed by the processor 910. The program 930 may be stored in the ROM 922. The processor 910 may perform any suitable action and processing by loading the program 930 into the ROM 924.

Embodiments of this application may be implemented by using the program 930, so that the device 900 can perform any process discussed with reference to FIG. 2, FIG. 5, or FIG. 6. Embodiments of this application may alternatively be implemented by hardware or a combination of software and hardware.

In some embodiments, the program 930 may be tangibly included in a computer-readable medium, and the computer-readable medium may be included in the device 900 (for example, in the memory 920) or another storage device that may be accessed by the device 900. The program 930 may be loaded from the computer-readable medium to the RAM 922 for execution. The computer-readable medium may include any type of tangible non-volatile memory, for example, a ROM, an EPROM, a flash memory, a hard disk, a CD, or a DVD.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

Embodiments of this application further provide at least one computer program product tangibly stored in a non-transitory computer-readable storage medium. The computer program product includes computer-executable instructions, such as instructions in a program module, executed in a device on a real or virtual target processor to perform the processes/methods as described above with reference to FIG. 4 to FIG. 9. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should be further noted that features and functions of two or more apparatuses according to this application may be specific in one apparatus. Instead, features and functions of one apparatus described above may be further specific in a plurality of apparatuses.

Various implementations of embodiments of this application have been described above. The foregoing descriptions are example descriptions rather than exhaustive descriptions, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

## Claims

1. A connection establishment method, comprising:
determining, by a controller, a logical tunnel from a first node of a plurality of nodes in a network to a second node of the plurality of nodes; and
updating, by the controller, the logical tunnel after the first node establishes a physical connection, wherein a common link exists between the physical connection and the logical tunnel.

2. The method according to claim 1, wherein determining the logical tunnel comprises:
allocating, by the controller, corresponding logical labels to the first node, the second node, and a node between the first node and the second node;
computing, by the controller, a logical tunnel path from the first node to the second node based on the logical labels; and
determining, by the controller, the logical tunnel from the first node to the second node based on the logical tunnel path.

3. The method according to claim 2, wherein allocating the corresponding logical label to the node comprises:
allocating the corresponding logical label to a physical port of the node, wherein the logical label is unique in the node.

4. The method according to claim 2, wherein determining the logical tunnel from the first node to the second node comprises:
determining logical tunnel configuration information of the logical tunnel, wherein the logical tunnel configuration information comprises a logical tunnel identifier, an available bandwidth, and a logical tunnel latency that are of the logical tunnel; and
determining logical cross-connection information of the logical tunnel, wherein the logical cross-connection information comprises: the logical tunnel identifier, and a relationship of forwarding from ingress logical labels of the first node, the second node, and the node between the first node and the second node to egress logical labels of the first node, the second node, and the node between the first node and the second node.

5. The method according to claim 4, further comprising:
sending, by the controller, the logical tunnel configuration information to the first node; and
sending, by the controller, the logical cross-connection information to the first node, the second node, and the node between the first node and the second node on the logical tunnel.

6. The method according to claim 1, further comprising:
receiving, by the controller, a connection establishment complete message, wherein the connection establishment complete message indicates that the establishment of the physical connection from the first node to the second node is completed.

7. The method according to claim 6, wherein the connection establishment complete message comprises a path and bandwidth information that are of the physical connection.

8. The method according to claim 6, wherein updating the logical tunnel comprises:
updating, by the controller in response to receiving the connection establishment complete message, the logical tunnel corresponding to the physical connection; or
periodically updating, by the controller, the logical tunnel corresponding to the physical connection.

9. The method according to claim 8, wherein updating the logical tunnel corresponding to the physical connection comprises:
updating, by the controller, an available bandwidth and a latency that are of the logical tunnel; and
notifying, by the controller, the first node of an updated available bandwidth and an updated latency that are of the logical tunnel.

10. The method according to claim 9, wherein updating the available bandwidth and the latency that are of the logical tunnel comprises:
searching, by the controller, for the corresponding logical tunnel based on physical ports through which the physical connection passes; and
recomputing and updating, by the controller, the available bandwidth and the latency that are of the corresponding logical tunnel.

11. The method according to any one of claims 1 to 10, wherein the logical tunnel does not occupy a physical bandwidth, and the logical tunnel corresponds to a plurality of physical connections.

12. A connection establishment method, comprising:
establishing, by a first node in a network, a physical connection from the first node to a second node based on a logical tunnel from the first node to the second node in the network; and
updating, by the first node, the logical tunnel based on the establishment of the physical connection.

13. The method according to claim 12, wherein updating, by the first node, the logical tunnel comprises:
receiving, by the first node, logical tunnel update configuration information from a controller in the network; and
updating, by the first node, the logical tunnel based on the logical tunnel update configuration information.

14. The method according to claim 12, wherein establishing, by the first node, the physical connection based on the logical tunnel comprises:
allocating, by the first node, a physical channel number and a physical bandwidth to the physical connection based on the logical tunnel.

15. The method according to claim 14, wherein determining the logical tunnel comprises:
receiving, by the first node, logical tunnel configuration information of the logical tunnel from a controller in the network, wherein the logical tunnel configuration information comprises a logical tunnel identifier, an available bandwidth, and a logical tunnel latency that are of the logical tunnel;
receiving, by the first node, logical cross-connection information of the logical tunnel from the controller, wherein the logical cross-connection information comprises: the logical tunnel identifier, and a relationship of forwarding from ingress logical labels of the first node, the second node, and a node between the first node and the second node to egress logical labels of the first node, the second node, and the node between the first node and the second node; and
determining, by the first node, the logical tunnel based on the logical tunnel configuration information and the logical cross-connection information.

16. The method according to claim 14, wherein establishing, by the first node, the physical connection based on the logical tunnel further comprises:
sending, by the first node, a connection establishment message to a downstream node, wherein the connection establishment message comprises information related to both the physical bandwidth and the physical channel number; and
receiving, by the first node, a connection establishment complete message, wherein the connection establishment complete message indicates that the establishment of the physical connection from the first node to the second node is completed.

17. The method according to claim 16, further comprising:
in response to sending, by the first node, the connection establishment message to the downstream node, pre-deducting, by the first node, a service bandwidth of the physical connection from a logical pipe of the first node.

18. The method according to claim 16, wherein the connection establishment message comprises a logical tunnel identifier of the logical tunnel, the physical bandwidth, and the physical channel number of the first node.

19. The method according to claim 16, wherein updating, by the first node, the logical tunnel comprises at least one of the following:
updating, by the first node, the logical tunnel in response to receiving the connection establishment complete message;
updating, by the first node, the logical tunnel in response to a failure of the controller; and
periodically updating, by the first node, the logical tunnel.

20. The method according to claim 19, wherein updating the logical tunnel comprises:
searching, by the first node, for the corresponding logical tunnel based on physical ports through which the physical connection passes;
recomputing, by the first node, an available bandwidth and a latency that are of the logical tunnel; and
notifying, by the first node, the downstream node of a changed available bandwidth and a changed latency that are of the logical tunnel.

21. The method according to claim 19, wherein periodically updating the logical tunnel comprises:
periodically sending, by the first node, a logical tunnel update request message to the downstream node;
receiving a logical tunnel update feedback message, wherein the logical tunnel update feedback message indicates an updated available bandwidth and an updated latency that are of the logical tunnel; and
updating, by the first node, an available bandwidth and a latency that are of the logical tunnel based on the logical tunnel update feedback message.

22. The method according to claim 14, wherein determining the logical tunnel comprises:
searching, by the first node, for a candidate logical tunnel from the first node to the second node;
determining, by the first node, whether the candidate logical tunnel meets a service requirement required by the physical connection; and
determining, by the first node in response to determining that the candidate logical tunnel meets the service requirement, the candidate logical tunnel as the logical tunnel.

23. The method according to claim 12, wherein the logical tunnel is based on logical labels that are of physical ports of the first node, the second node, and a node between the first node and the second node and that are determined by a controller, and the logical label is unique in the node.

24. A controller, comprising a processor and a memory, wherein the memory stores instructions executed by the processor, and when the instructions are executed by the processor, the controller is caused to implement the method according to any one of claims 1 to 11.

25. A first node, comprising a processor and a memory, wherein the memory stores instructions executed by the processor, and when the instructions are executed by the processor, the first node is caused to implement the method according to any one of claims 12 to 23.

26. A communication system, comprising a controller for performing the method according to any one of claims 1 to 11 and a first node for performing the method according to any one of claims 12 to 23, wherein the communication system is configured to implement the method according to any one of claims 1 to 23 by using the controller and the first node.

27. A computer-readable storage medium, wherein the computer-readable storage medium stores a computer program, and when the computer program is executed by a processor, the method according to any one of claims 1 to 23 is implemented.
